# EUROPÄISCHE PATENTSCHRIFT

(11) **EP 3 310 553 B1**
(45) Veröffentlichungstag und Bekanntmachung des Hinweises auf die Patenterteilung: **03.04.2019**
(21) Anmeldenummer: 16729263.0
(22) Anmeldetag: 15.06.2016
(51) Int. Cl.: B29C 64/153, B29C 64/20, B22F 3/105, B33Y 30/00

(54) **PUVERBETTBASIERTES LASERSCHMELZEN-ANLAGE**
POWDER BED-BASED LASER MELTING SYSTEM
INSTALLATION DE FUSION LASER SUR LIT DE POUDRE

(30) Priorität: 19.06.2015 DE 102015109848
(43) Veröffentlichungstag der Anmeldung: 25.04.2018
(73) Patentinhaber: Aconity GmbH, 52134 Herzogenrath (DE)
(72) Erfinder: HAGEDORN, Yves, 52064 Aachen (DE); GÖRRES, Andreas, 52074 Aachen (DE)
(74) Vertreter: Moser Götze & Partner Patentanwälte mbB
(86) Internationale Anmeldenummer: PCT/EP2016/063767
(87) Internationale Veröffentlichungsnummer: WO 2016/202866

(56) Entgegenhaltungen:
- EP-A1- 2 399 695
- EP-A2- 2 732 889

## Beschreibung

Die Erfindung betrifft eine PBLS-Anlage.

Pulverbettbasiertes Laserstrahlschmelzen (PBLS), für das auch die Bezeichnung selektives Laserschmelzen verwendet wird, gehört zur Gruppe der generativen Fertigungsverfahren, die auch als Additive Manufacturing (AM) Verfahren bezeichnet werden. PBLS ist beispielsweise aus der deutschen Patenschrift DE 196 49 865 C1 bekannt.

Als pulverbettbasiertes Verfahren ist PBLS insbesondere vom selektiven Lasersintern sowie vom Laserauftragschweißen zu unterscheiden. Beim PBLS erfolgt ein schichtweises Herstellen von Bauteilen aus einem zunächst pulverförmig vorliegenden Werkstoff, insbesondere in Form von Kunststoffen oder Metallen, der - anders als beim Laserauftragschweißen - schichtweise als ruhendes Pulverbett bereitgestellt wird und - anders als beim selektiven Lasersintern - vollständig aufgeschmolzen wird und ohne Zugabe von Bindemitteln erstarrt.

Beim PBLS-Verfahren, das auf einer entsprechenden PBLS-Anlage durchgeführt werden kann, wird mittels eines beweglichen Auftragsmediums, das beispielsweise als Bürste ausgebildet sein kann, eine erste dünne Pulverschicht des zu verarbeitenden Werkstoffs mit einer gleichmäßigen Schichtdicke von üblicherweise 10 bis 100 µm auf eine auch als Grundplatte bezeichnete Substratplatte aufgetragen. Das Auftragsmedium ist üblicherweise an einem Schieber befestigt, der zur erforderlichen Bewegung des Auftragsmediums entsprechend beweglich gelagert ist. Die Substratplatte wird von einer Trägerplatte getragen und ist auf dieser lösbar befestigt, beispielsweise angeschraubt. Die Trägerplatte und dadurch auch die Substratplatte sind hierbei zunächst in einer Ausgangslage angeordnet, in der sich die Substratplatte mit ihrer Oberfläche um den Betrag der gewünschten Schichtdicke unterhalb einer sich horizontal erstreckenden Arbeitsebene befindet. Üblicherweise bildet die Trägerplatte den beweglichen Boden eines Behälters (Bauteilbehälter), der sich mit einer dem Boden gegenüberliegenden oberen Öffnung unterhalb der Arbeitsebene an die Arbeitsebene anschließt. Hierbei ist der Boden nach Art eines Kolbens innerhalb der rechtwinklig zum Boden verlaufenden Seitenwand des Behälters eingepasst und beweglich, um zusammen mit der Substratplatte schrittweise in Bezug zur Arbeitsebene abgesenkt werden zu können. Oberhalb und parallel zur Arbeitsebene ist das Auftragsmedium über den Schieber beweglich, um das Pulver ausgehend von der Arbeitsebene auf die Trägerplatte beziehungsweise die darauf angeordnete Substratplatte zu schieben beziehungsweise aufzutragen. Beim Überfahren des Behälters überspannt das Auftragsmedium die Öffnung des Behälters vollständig, um zwischen der Trägerplatte und der Arbeitsebene eine gleichmäßige Pulverschicht mit möglichst ebener Oberfläche erzeugen zu können.

Anschließend wird das Pulver der aufgetragenen Schicht mittels eines Laserstrahls selektiv beziehungsweise lokal vollständig aufgeschmolzen, das heißt nur in nach einem 3D-CAD-Modell des zu fertigenden Bauteils ausgewählten Bereichen. Hierzu wird das 3D-CAD-Modell von einer Software in einzelne Schichten unterteilt (slicen), aus denen Bahnen nach Art von Höhenlinien des Bauteils als ausgewählte Bereiche ermittelt werden, entlang denen der Laserstrahl zum selektiven beziehungsweise lokalen Aufschmelzen der jeweiligen Pulverschicht geführt wird. Durch das vollständige Aufschmelzen und anschließende Erstarren der jeweiligen Pulverschicht erfolgt ein schichtweises Verdichten des Werkstoffs zu dem zu fertigenden Bauteil.

Ausgehend von der Ausgangslage wird die dementsprechend als Bauplattform dienende Trägerplatte beziehungsweise der Boden des Behälters nach dem entsprechenden Abtasten beziehungsweise Scannen der ausgewählten Bereiche der ersten Pulverschicht um den Betrag einer weiteren gewünschten Schichtdicke abgesenkt und eine weitere Pulverschicht auf die jeweils vorherige Schicht aufgetragen, aufgeschmolzen und hierdurch verdichtet sowie mit der vorherigen Schicht verbunden. Zumindest eine der vorherigen Schichten wird hierbei zumindest teilweise wieder aufgeschmolzen, um eine stoffschlüssige Verbindung mit der folgenden Schicht zu gewährleisten. Dieser Zyklus wiederholt sich so lange mit mehreren Pulverschichten, bis das Bauteil fertig gestellt ist. Durch das selektive Aufschmelzen ausgewählter Bereiche in jeder Pulverschicht wird in dem Behälter zwischen der Trägerplatte und der Arbeitsebene auch ein Pulverbett aus nicht aufgeschmolzenem Pulver aller aufgetragenen Schichten aufgebaut, das das Bauteil umgibt. Zur Bauteilentnahme aus dem Pulverbett wird der von der Trägerplatte gebildete Boden des Behälters in Richtung der Arbeitsebene und damit in Richtung einer dem Boden gegenüberliegenden oberen Öffnung des Behälters angehoben und die Substratplatte, mit der das Bauteil über die erste Schicht stoffschlüssig verbunden ist, von der Trägerplatte gelöst und aus der PBLS-Anlage entnommen. Das Bauteil wird anschließend von der Substratplatte getrennt, beispielswiese abgesägt. Auf diese Weise können mittels PBLS drei-dimensionale Bauteile formlos, das heißt ohne Werkzeuge oder Formen, und nahezu ohne Einschränkungen bezüglich der geometrischen Bauteilkomplexität hergestellt werden.

Um dem Auftragsmedium einer PBLS-Anlage das Pulver auf der Arbeitsebene bereit zu stellen, sind im Wesentlichen Pulverfördermechanismen nach dem Bottum Up Prinzip und nach dem Top Down Prinzip bekannt, über die das Pulver zur Arbeitsebene gefördert werden kann. Bei einem Bottum Up Mechanismus wird das Pulver von unterhalb der Arbeitsebene nach oben auf die Arbeitsebene und bei einem Top Down Mechanismus von oberhalb der Arbeitsebene nach unten auf die Arbeitsebene gefördert.

Beispielsweise sind PBLS-Anlagen mit einem Bottum Up Mechanismus bekannt, der einen Behälter (Pulverbehälter) umfasst, der analog zu dem oben beschriebenen Behälter für das Bauteil ausgebildet ist. Dementsprechend umfasst dieser Behälter ebenfalls einen nach Art eines Kolbens beweglichen Boden. Eine dem Boden gegenüberliegende obere Öffnung des Behälters ist in der Arbeitsebene angeordnet, wovon ausgehend sich der Behälter unterhalb der Arbeitsebene an die Arbeitsebene anschließt. Das in dem Behälter des Bottom Up-Pulverfördermechanismus bevorratete Pulver wird durch Anheben der den Boden bildenden Trägerplatte innerhalb des Behälters und damit einhergehende Verkleinerung des verfügbaren Volumens des Behälters in Richtung der oberen Öffnung beziehungsweise durch die dort angeordnete obere Öffnung des Behälters bewegt und damit zur Arbeitsebene gefördert und dort dem Auftragsmedium bereit gestellt. Durch umgekehrtes Absenken des Bodens wird das verfügbare Volumen des Behälters vergrößert, um darin eine entsprechende Menge an Pulver aufnehmen und bevorraten zu können.

Anders als bei Top Down Mechanismen fällt das Pulver bei einem Bottom Up Mechanismus nicht schwerkraftgetrieben in den Bereich der Arbeitsebene. Dadurch wird eine Staubbildung, die zu einer unerwünschten Verschmutzung optischer und beweglicher Bauteile der PBLS-Anlage führt, minimiert und in der Folge eine gute Prozessqualität und -stabilität gewährleistet. Darüber hinaus sind Bottum Up Mechanismen mit einem Behälter mit kolbenartig beweglichem Boden besonders einfach zu reinigen, wenn beispielsweise für einen Werkstoffwechsel das Pulver möglichst rückstandslos ausgetauscht werden muss. Dies ist bei anderen Bottom Up Mechanismen, die das Pulver beispielsweise mittels einer Förderschnecke zur Arbeitsebene befördern, mit größerem Aufwand verbunden.

Außerdem ist es bekannt, in einer PBLS-Anlage neben dem Bauteilbehälter einen so genannten Pulverüberlauf vorzusehen, in das überschüssiges Pulver hinein geschoben werden kann, das sich noch vor dem Schieber befindet, nachdem dieser zum Aufbau einer neuen Pulverschicht den Bauteilbehälter überfahren hat. Hierfür weist die Arbeitsebene neben dem Bauteilbehälter eine Ausnehmung auf, die von der Öffnung eines den Pulverüberlauf bildenden Auffangbehälters gebildet wird, der sich über die Öffnung unterhalb der Arbeitsebene an die Ausnehmung anschließt und in den das überschüssige Pulver hinein fallen kann. Durch einen solchen Pulverüberlauf kann die Prozesskammer für eine gute Prozessstabilität möglichst frei von überschüssigem Pulver gehalten werden.

Um während des Schmelzprozesses eine durch Oxidation erfolgende Kontamination des Werkstoffs zu verhindern, wird PBLS in einer Schutzgasatmosphäre durchgeführt. Dadurch können mittels PBLS relative Bauteildichten von mehr als 99 % erreicht werden. Die als Schüttdichte bezeichnete relative Dichte des Pulvers beträgt hingegen etwa 50% und damit etwa die Hälfte der relativen Dichte des erzeugten Bauteils. Die relative Dichte dient somit als Maß für die Porosität des Werkstoffs in seiner jeweils vorliegenden Form, das heißt als fertiges Bauteil oder als Pulver, in Bezug auf den entsprechenden Werkstoff in einer porenfreien Form. Auch weisen die mittels PBLS gefertigten Bauteile mechanische Eigenschaften auf, die weitgehend denjenigen des Grundwerkstoffs beziehungsweise denjenigen entsprechen, die Bauteile aufweisen, die mittels konventioneller Verfahren aus dem Grundwerkstoff hergestellt werden.

Zu diesem Zweck weisen PBLS-Anlagen eine gasdichte Prozesskammer auf, in der eine entsprechende Schutzgasatmosphäre, insbesondere eine inerte Gasatmosphäre mit Argon oder Stickstoff, aufrechterhalten wird. Unmittelbar innerhalb der Prozesskammer sind üblicherweise zumindest die Arbeitsebene und das Auftragsmedium angeordnet. Auch in dem Bauteilbehälter mit der Bauplattform und der Substratplatte, dem Pulverbehälter des Bottom Up-Pulverfördermechanismus und dem Pulverüberlauf herrscht Schutzgasatmosphäre, so dass diese hierfür entsprechend gasdicht an die Prozesskammer angeschlossen sind.

Bei bekannten PBLS-Anlagen ist deren Pulverauftragseinheit in der Prozesskammer in einer fixierten Arbeitsposition oberhalb eines Kammerbodens der Prozesskammer angeordnet, wodurch die Prozesskammer und insbesondere der Kammerboden im Bereich der Pulverauftragseinheit nicht oder nur schwer zugänglich und damit beispielsweise bei einem Werkstoffwechsel nur aufwendig zu reinigen ist.

Aus der DE 199 52 998 A1 ist eine PBLS-Anlage bekannt, deren Pulverauftragseinheit einen Rakel umfasst, der an einem Deckel in der Prozesskammer angeordnet und zum Auftragen einer Pulverschicht auf einer Arbeitsebene in horziontaler Richtung bewegbar ist. Außerdem ist der Rakel gemeinsam mit dem Deckel schubladenartig in einer horizontalen Richtung translatorisch bewegbar. Die Pulverauftragseinheit bleibt daher im laufenden Betrieb in einer Arbeitsposition bei geschlossenem Deckel ebenso wie außerhalb des laufenden Betriebs in einer Ruheposition bei geöffnetem Deckel mit all ihren Komponenten und insbesondere einschließlich des Rakels gegenüber dem Kammerboden gleich weit beabstandet innerhalb der Prozesskammer.

Die DE 20 2009 010 489 U1 offenbart eine PBLS-Anlage, deren Pulverauftragseinheit im laufenden Betrieb zum Auftragen einer Pulverschicht um eine vertikale Achse schwenkbar gelagert ist.

Die US 6,764,636 B1 betrifft eine Stereolithographie-Anlage mit einem Auftragsmedium zum Erzeugen einer Schicht aus viskosem flüssigen Kunststoffmaterial, insbesondere Harz. Das Auftragsmedium ist in horizontaler Richtung hin und her bewegbar und schwenkbar.

Die EP 2 399 695 betrifft eine Lasersintervorrichtung mit einer Pulverauftragsvorrichtung, deren Pulverkammer und Glättungsschieber während des Auftragens einer Pulverschicht im laufenden Betrieb gemeinsam um eine horizontale Achse schwenkbar sind, so dass die Pulverschicht entlang eines Kreisbahnsegments aufgetragen wird. Die Pulverauftragsvorrichtung ist hierbei an einer Gabel aufgehängt und mit dieser in vertikaler Richtung verschiebbar.

Die EP 2 732 889 A2 betrifft eine Lasersintervorrichtung mit einer Pulverauftragseinheit, deren Auftragsmedium im laufenden Betrieb in zwei entgegengesetzten Richtungen parallel zur horizontalen Arbeitsebene hin und her bewegt werden kann. Im Zusammenhang seines Richtungswechsels wird das Auftragsmedium um eine horizontale Achse verschwenkt, so dass das Auftragsmedium auf dem Rückweg eine gegenüber dem Hinweg verschwenkte Position einnimmt. Das Auftragsmedium ist hierfür schwenkbar an einem Führungsschlitten gelagert, der entlang einer ortsfesten Führung parallel zur horizontalen Arbeitsebene hin und her bewegt werden kann.

Der Erfindung liegt die Aufgabe zu Grunde, eine verbesserte PBLS-Anlage bereitzustellen, deren Kammerboden leicht zugänglich und damit leicht zu reinigen ist.

Diese Aufgabe wird durch eine PBLS-Anlage mit den Merkmalen des Anspruchs 1 gelöst. In den abhängigen Ansprüchen sind vorteilhafte Ausgestaltungen der Erfindung angegeben.

Erfindungsgemäß wird eine verbesserte PBLS-Anlage mit einer Prozesskammer, die einen Kammerboden aufweist, der eine Arbeitsebene der PBLS-Anlage bildet, und mit einer Pulverauftragseinheit mit einem parallel zur Arbeitsebene beweglichen Auftragsmedium, wobei die Pulverauftragseinheit an einer Tragkonstruktion der PBLS-Anlage derart bewegbar befestigt ist, dass die Pulverauftragseinheit zumindest teilweise zwischen einer Arbeitsposition, in der die Pulverauftragseinheit im laufenden Betrieb der PBLS-Anlage in der Prozesskammer und oberhalb des Kammerbodens angeordnet ist und wobei mindestens eine Komponente der Pulverauftragseinheit ortsfest angeordnet ist, und einer Ruheposition bewegbar ist, dadurch erreicht, dass die mindestens eine Komponente der Pulverauftragseinheit, die im laufenden Betrieb der PBLS-Anlage in der Arbeitsposition ortsfest angeordnet ist, eine schienenförmige lineare Antriebseinheit und/oder eine als Führungsschiene ausgebildete Führung der Pulverauftragseinheit ist und in der Ruheposition und/oder zwischen der Ruheposition und der Arbeitsposition in Bezug auf den Kammerboden weiter beabstandet positioniert ist als in der Arbeitsposition im laufenden Betrieb der PBLS-Anlage. Die entsprechende Komponente oder Komponenten können hierfür insbesondere translatorisch vertikal bezüglich des Kammerbodens und/oder rotatorisch bewegt werden, um den Kammerboden beispielsweise für eine Reinigung ungehindert zugänglich zu machen. Auch ist die mindestens eine entsprechend vorübergehend umpositionierte Komponente selbst hierdurch besser zugänglich und damit leichter zu reinigen. Es ist ersichtlich, dass die vorliegende Aufgabe nicht nur von einer Ruheposition im Sinne einer Endposition gelöst wird. Stattdessen gilt dies auch für andere Positionen, die von der Arbeitsposition abweichen und in Richtung der Ruheposition zwischen der Ruheposition und der Arbeitsposition eingenommen werden können, da eine entsprechend veränderte Lage zumindest einer entsprechenden Komponente der Pulverauftragseinheit eine verbesserte Zugänglichkeit des Kammerbodens ermöglicht.

Die Zugänglichkeit des Kammerbodens und der mindestens einen Komponente wird weiter dadurch verbessert, dass die Pulverauftragseinheit in der Ruheposition zumindest teilweise außerhalb der Prozesskammer angeordnet ist.

In konstruktiv einfacher Weise ist vorgesehen, dass die Pulverauftragseinheit derart drehbar befestigt ist, dass die mindestens eine Komponente der Pulverauftragseinheit zwischen der Arbeitsposition und der Ruheposition eine erste Rotationsbewegung in Bezug auf eine erste Drehachse ausführt. Die Rotationsbewegung kann die von der Antriebseinheit und/oder der als Führungsschiene ausgebildeten Führung der Pulverauftragseinheit gebildete Komponente gemeinsam mit einem Auftragsmedium ausführen. Vorzugsweise ist vorgesehen, dass die erste Drehachse parallel zu dem Kammerboden ausgerichtet ist und vorzugsweise ortsfest an der PBLS-Anlage, insbesondere parallel zu einer Seitenwand der Prozesskammer und/oder parallel oder quer zu einer Fahrtrichtung eines Schiebers der Pulverauftragseinheit, angeordnet ist. Dadurch kann die Pulvereinheit so gewendet werden, dass sie mit ihrer Innenseite zumindest aus ihrer in der Arbeitsposition vertikal nach unten zeigenden Lage gedreht wird und anschließend in der Ruheposition vorzugsweise schräg nach oben zeigt, um für ihre Reinigung bei einem Werkstoffwechsel besonders einfach zugänglich zu sein. Auch die Zugänglichkeit der Prozesskammer und des Kammerbodens wird verbessert.

Das Wenden der Pulverauftragseinheit wird weiter dadurch erleichtert, dass die Pulverauftragseinheit derart drehbar befestigt ist, dass die Pulverauftragseinheit zwischen der Arbeitsposition und der Ruheposition zusätzlich eine zweite Rotationsbewegung in Bezug auf eine zweite Drehachse ausführt, die vorzugsweise parallel zu der ersten Drehachse verläuft und vorzugsweise die erste Rotationsbewegung und die zweite Rotationsbewegung einander entgegengesetzt sind.

In konstruktiv einfacher Weise ist vorgesehen, dass die PBLS-Anlage zur Befestigung der Pulverauftragseinheit einen Schwenkmechanismus mit einem Schwenkarm aufweist, an dem die Pulverauftragseinheit befestigt ist. Über den Schwenkmechanismus ist eine besonders zuverlässige und sichere Bewegung zwischen der Arbeitsposition und der Ruheposition gewährleistet.

In vorteilhafter Weise ist vorgesehen, dass der Schwenkarm über ein erstes Drehlager um die erste Drehachse drehbar gelagert ist.

Ferner ist in vorteilhafter Weise vorgesehen, dass die Pulverauftragseinheit über ein zweites Drehlager um die zweite Drehachse drehbar an dem Schwenkarm gelagert ist.

In konstruktiv einfacher Weise ist vorgesehen, dass der Schwenkmechanismus einen Zugmitteltrieb, vorzugsweise einen formschlüssigen Zugmitteltrieb, insbesondere in Form eines Riementriebs oder Kettengetriebes, umfasst, der derart mit der Pulverauftragseinheit verbunden ist, dass die erste Rotationsbewegung mit der zweiten Rotationsbewegung gekoppelt ist, vorzugsweise derart, dass die erste Rotationsbewegung und die zweite Rotationsbewegung einander entgegengesetzt sind.

In vorteilhafter Ausgestaltung ist vorgesehen, dass der Zugmitteltrieb ein Zugmittel umfasst, der eine erste Scheibe und eine zweite Scheibe umspannt, wobei die erste Scheibe drehfest in Bezug auf die erste Drehachse und die zweite Scheibe drehbar um die zweite Drehachse gelagert und drehfest mit der Pulverauftragseinheit verbunden ist.

Die Rotationsbewegung der Pulverauftragseinheit wird dadurch erleichtert, dass der Schwenkmechanismus eine Krafteinrichtung umfasst, die insbesondere als Federelement, vorzugsweise in Form einer Gasdruckfeder, als hydraulischer oder pneumatischer Antrieb, insbesondere in Form eines Hubzylinders, oder als linear wirkender elektrischer Antrieb ausgebildet ist, und die derart angeordnet ist, dass sie in der Arbeitsposition und in der Ruheposition neben dem zweiten Drehlager an der Pulverauftragseinheit angreift, um die Rotationsbewegungen des Schwenkmechanismus zumindest zu unterstützen. Bei entsprechender Dimensionierung können die Rotationsbewegungen durch die Krafteinrichtung auch vollständig bewirkt werden.

Eine besonders sichere bewegbare Befestigung der Pulverauftragseinheit wird dadurch erreicht, dass die Pulverauftragseinheit, insbesondere eine Antriebseinheit und/oder eine vorzugsweise als Führungsschiene ausgebildete Führung der Pulverauftragseinheit, an einer Seitenwand und/oder an einer Kammerdecke der Prozesskammer befestigt ist, wobei die Seitenwand und/oder die Kammerdecke gemeinsam mit der Pulverauftragseinheit zwischen einer geschlossenen Position, die der Arbeitsposition entspricht, und einer offenen Position, die der Ruheposition entspricht, bewegbar ist.

In konstruktiv einfacher Weise ist vorgesehen, dass die Seitenwand und/oder die Kammerdecke Teil eines bewegbaren Deckels der Prozesskammer ist, der zwischen der Pulverauftragseinheit und dem Schwenkmechanismus angeordnet ist.

Einer weiteren Ausführungsform der Offenbarung liegt die Aufgabe zugrunde, eine verbesserte PBLS-Anlage bereitzustellen, deren von oben zugängliche Prozesskammer über einen bewegbaren Deckel leicht öffenbar und verschließbar ist.

Ein zwischen einer offenen und einer geschlossenen Position scharnierartig bewegbarer Deckel ist aus der DE 11 2004 000301 T5 in Bezug auf eine Anlage zum selektiven Lasersintern bekannt.

PBLS-Anlagen, deren Prozesskammer über einen Deckel verschlossen und geöffnet werden kann, sind bereits aus der DE 20 2012 007 238 U1, der DE 199 52 998 A1, der DE 103 42 883 A1 bekannt.

Gemäß einer weiteren Ausführungsform der Offenbarung, wird eine verbesserte PBLS-Anlage mit einer Prozesskammer, die einen Deckel aufweist, der zumindest einen Teil einer Kammerdecke umfasst und zum Öffnen und Verschließen der Prozesskammer derart drehbar an einer Tragkonstruktion der PBLS-Anlage befestigt ist, dass der Deckel zwischen einer offenen und einer geschlossenen Position bewegbar ist und eine erste Rotationsbewegung in Bezug auf eine erste Drehachse ausführt, dadurch erreicht, dass die PBLS-Anlage zur Befestigung des Deckels einen Schwenkmechanismus mit einem Schwenkarm aufweist, an dem der Deckel befestigt ist. Über den Schwenkmechanismus ist eine besonders zuverlässige und sichere Bewegung zwischen der offenen und der geschlossenen Position gewährleistet. Dadurch ist der Deckel in der offenen, der geschlossenen sowie jeder dazwischen liegenden Position mit der PBLS-Anlage verbunden und kann auf einfache Weise zwischen der offenen und der geschlossenen Position geführt werden. Vorzugsweise ist vorgesehen, dass die erste Drehachse parallel zu einem Kammerboden der Prozesskammer ausgerichtet ist und vorzugsweise ortsfest an der PBLS-Anlage, insbesondere parallel zu einer Seitenwand der Prozesskammer und/oder parallel oder quer zu einer Fahrtrichtung eines Schiebers einer Pulverauftragseinheit der PBLS-Anlage, angeordnet ist. Dadurch kann der Deckel so gewendet werden, dass er mit seiner Innenseite zumindest aus seiner in der geschlossenen Position vertikal nach unten zeigenden Lage gedreht wird und anschließend in der Ruheposition vorzugsweise schräg nach oben zeigt, um für eine Reinigung bei einem Werkstoffwechsel besonders einfach zugänglich zu sein. Auch die Zugänglichkeit der Prozesskammer und des Kammerbodens wird verbessert.

Das Wenden des Deckels wird weiter dadurch erleichtert, dass der Deckel derart drehbar befestigt ist, dass der Deckel zwischen der offenen und der geschlossenen Position zusätzlich eine zweite Rotationsbewegung in Bezug auf eine zweite Drehachse ausführt, die vorzugsweise parallel zu der ersten Drehachse verläuft und vorzugsweise die erste Rotationsbewegung und die zweite Rotationsbewegung einander entgegengesetzt sind.

In vorteilhafter Weise ist vorgesehen, dass der Schwenkarm über ein erstes Drehlager um die erste Drehachse drehbar gelagert ist.

Ferner ist in vorteilhafter Weise vorgesehen, dass der Deckel über ein zweites Drehlager um die zweite Drehachse drehbar an dem Schwenkarm gelagert ist.

In konstruktiv einfacher Weise ist vorgesehen, dass der Schwenkmechanismus einen Zugmitteltrieb, vorzugsweise einen formschlüssigen Zugmitteltrieb, insbesondere in Form eines Riementriebs oder Kettengetriebes, umfasst, der derart mit dem Deckel verbunden ist, dass die erste Rotationsbewegung mit der zweiten Rotationsbewegung gekoppelt ist, vorzugsweise derart, dass die erste Rotationsbewegung und die zweite Rotationsbewegung einander entgegengesetzt sind.

In vorteilhafter Ausgestaltung ist vorgesehen, dass der Zugmitteltrieb ein Zugmittel umfasst, der eine erste Scheibe und eine zweite Scheibe umspannt, wobei die erste Scheibe drehfest in Bezug auf die erste Drehachse und die zweite Scheibe drehbar um die zweite Drehachse gelagert und drehfest mit dem Deckel verbunden ist.

Die Rotationsbewegung des Deckels wird dadurch erleichtert, dass der Schwenkmechanismus eine Krafteinrichtung umfasst, die insbesondere als Federelement, vorzugsweise in Form einer Gasdruckfeder, als hydraulischer oder pneumatischer Antrieb, insbesondere in Form eines Hubzylinders, oder als linear wirkender elektrischer Antrieb ausgebildet ist, und die derart angeordnet ist, dass sie in der offenen und in der geschlossenen Position neben dem zweiten Drehlager an dem Deckel angreift, um die Rotationsbewegungen des Schwenkmechanismus zumindest zu unterstützen. Bei entsprechender Dimensionierung können die Rotationsbewegungen durch die Krafteinrichtung auch vollständig bewirkt werden.

In vorteilhafter Weise ist außerdem vorgesehen, dass die PBLS-Anlage eine Pulverauftragseinheit umfasst, die an dem Deckel befestigt ist, und dadurch gemeinsam mit dem Deckel zwischen einer Arbeitsposition, die der geschlossenen Position entspricht, und einer Ruheposition, die der offenen Position entspricht, bewegbar ist. Dadurch wird der Reinigungsaufwand bei einem Werkstoffwechsel erleichtert, da der Kammerboden frei von schmutzempfindlichen beweglichen Komponenten der Pulverauftragseinheit und somit deren Verunreinigung durch Pulver minimiert wird.

In vorteilhafter Weise ist vorgesehen, dass der Deckel eine Seitenwand der Prozesskammer umfasst. Dadurch wird aufgrund der entfernten Seitenwand insbesondere in der offenen Position der Kammerboden barrierefrei zugänglich und Pulver kann bei einem Werkstoffwechsel besonders einfach im Bereich der mit dem Deckel wegbewegten Seitenwand entfernt werden.

Nachfolgend wird ein Ausführungsbeispiel der Erfindung an Hand der Zeichnungen näher erläutert. Es zeigen:
Figur 1 eine Ansicht einer PBLS-Anlage mit vollständig geöffneter Prozesskammer,
Figur 2 eine Ansicht einer Innenseite des Deckels der Prozesskammer der PBLS-Anlage,
Figur 2a eine Ansicht einer Pulverauftragseinheit in ihrer Arbeitsposition bei vollständig geschlossener Prozesskammer,
Figur 3 eine Seitenansicht der PBLS-Anlage gemäß Figur 1,
Figur 4 eine Seitenansicht der PBLS-Anlage mit teilweise geöffneter Prozesskammer,
Figur 5 eine Seitenansicht der PBLS-Anlage mit vollständig geschlossener Prozesskammer und
Figur 6 eine Ansicht eines Riementriebs eines Schwenkmechanismus für den Deckel der Prozesskammer.

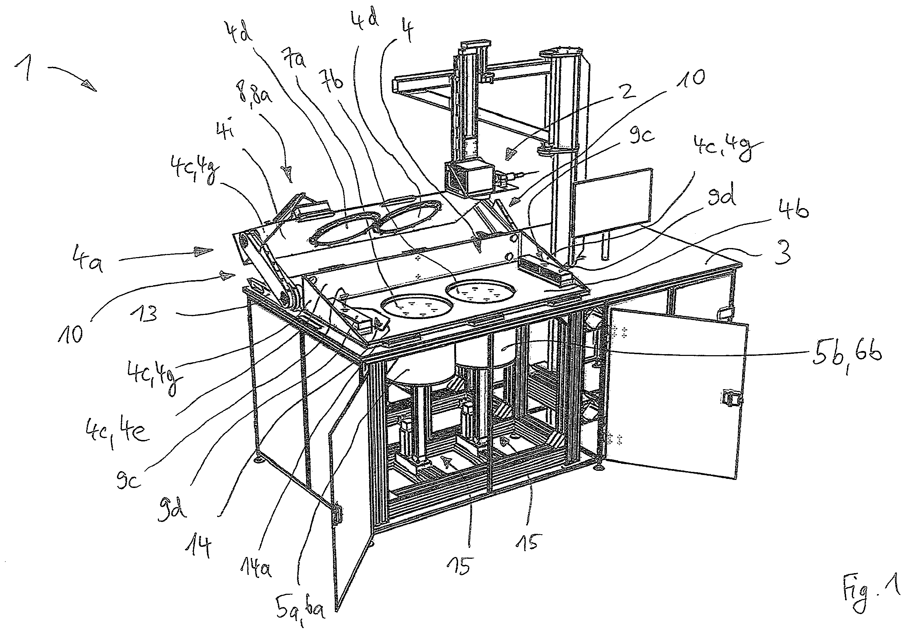

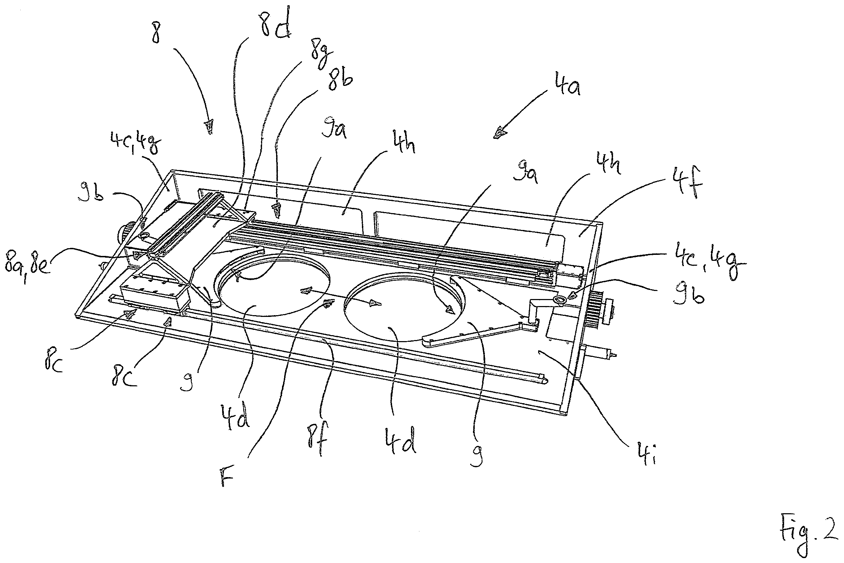

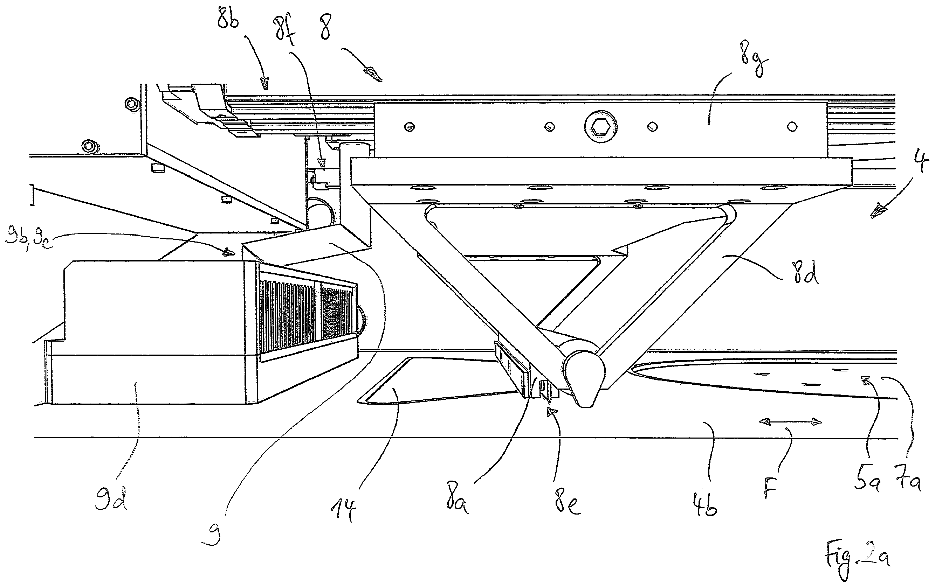

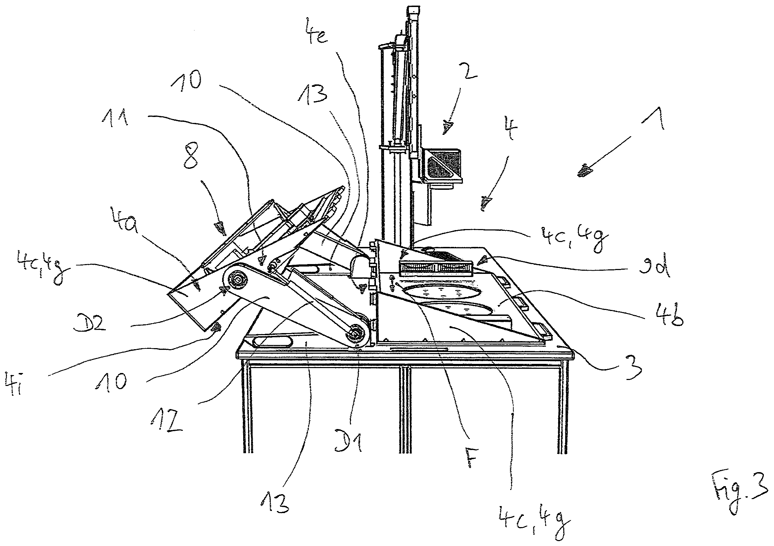

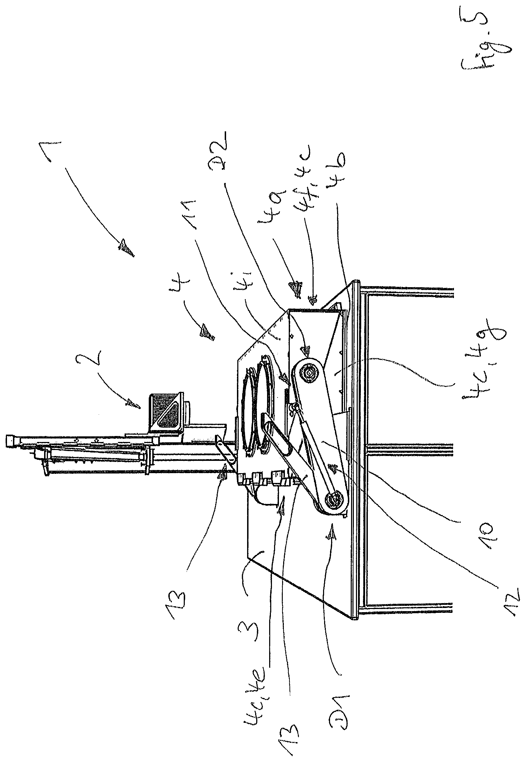

Die Figur 1 zeigt eine Ansicht einer PBLS-Anlage 1 mit einem Bottom Up-Pulverfördermechanismus. Die PBLS-Anlage 1 ist als so genanntes Einscannersystem ausgebildet und umfasst dementsprechend nur eine Scannereinheit 2 mit einem Laser. Grundsätzlich ist die PBLS-Anlage 1 jedoch nicht auf Laser beschränkt, da anstelle eines Lasers auch eine andere Einrichtung verwendet werden kann, die eine zum selektiven Aufschmelzen des jeweiligen Werkstoffs geeignete elektromagnetische Strahlung erzeugen kann, beispielsweise Electron Beam Melting (EBM). Außerdem weist die PBLS-Anlage 1 einen gestellartigen Tisch 3 auf, der eine gehäuseartig ausgebildete Prozesskammer 4 trägt. Die Prozesskammer 4 hat einen im Wesentlichen kastenförmigen beziehungsweise quaderförmigen Aufbau mit einer als bewegbarer Deckel 4a ausgebildeten Kammerdecke 4i, einem Kammerboden 4b und vier Seitenwänden 4c. Die vier Seitenwände 4c sind dementsprechend jeweils rechteckförmig ausgebildet und werden gebildet von einer Rückwand 4e, einer dieser gegenüberliegenden Vorderwand 4f (siehe Figur 2) und zwei Stirnwänden 4g. An ihrer Unterseite ist die Prozesskammer 4 über den Kammerboden 4b mit dem Tisch 3 verbunden. Der Deckel 4a umfasst zumindest die Kammerdecke 4i und ist zum Öffnen oder Verschließen der Prozesskammer 4 relativ zu dem Kammerboden 4b sowie zu dem Tisch 3 zwischen einer in den Figuren 1 und 3 dargestellten offenen und einer in Figur 5 dargestellten geschlossenen Position bewegbar. Der Deckel 4a dient somit in der geschlossenen Position zum Verschließen der Prozesskammer 4 in ihrem oberen Bereich beziehungsweise in der offenen Position dazu, dass die Prozesskammer 4 von oben zugänglich ist. In diesem Sinne ist der Deckel 4a nicht mit einer etwaigen Seitentür an einer der Seitenwände 4c gleichzusetzen.

Um das PBLS-Verfahren durchführen zu können, muss der Deckel 4a in der geschlossenen Position sein. Nur dann ist die Prozesskammer 4 gasdicht gegenüber ihrer Umgebung verschlossen, so dass wie eingangs beschrieben über eine nicht dargestellte Schutzgaszuführung die zur Durchführung des PBLS-Verfahrens erforderliche Schutzgasatmosphäre in der Prozesskammer 4 hergestellt und aufrechterhalten werden kann.

Über den Tisch 3 kann die PBLS-Anlage 1 auf einem Boden aufgestellt werden. Die vollständig, insbesondere einschließlich der optischen Komponenten zur definierten Einkopplung der Laserstrahlung, außerhalb der Prozesskammer 4 angeordnete Scannereinheit 2 kann mit dem Tisch 3 verbunden sein und sich hieran abstützen und/oder wie in Figur 1 angedeutet separat auf dem Boden aufgeständert sein. Außerdem ist die Scannereinheit 2 oberhalb der Prozesskammer 4 und/oder neben die Prozesskammer 4 verschwenkbar und umgekehrt für den laufenden Betrieb der PBLS-Anlage 1 über die Prozesskammer 4 zurück verschwenkbar. Der Laserstrahl der entsprechend zurück geschwenkten und somit über der Prozesskammer 4 angeordneten Scannereinheit 2 wird dann über eines von zwei im Deckel 4a beziehungsweise der Kammerdecke 4i vorgesehenen Einkoppelgläsern 4d (siehe auch Figur 2) in die Prozesskammer 4 eingekoppelt und zu den ausgewählten Bereichen im Bereich der aufzuschmelzenden Pulverschicht geführt. Die PBLS-Anlage 1 kann jedoch nicht nur als Einscannersystem mit einer Scannereinheit 2, sondern auch als Multiscannersystem, insbesondere als Zweiscannersystem mit zwei Scannereinheit 2, ausgebildet sein. Dementsprechend muss zumindest ein weiterer Laserstrahl über eines der Einkoppelgläser 4d in die Prozesskammer eingekoppelt werden, wobei auch mehrere Laserstrahlen durch ein Einkoppelglas 4d eingekoppelt werden können.

Innerhalb der Prozesskammer 4 ist eine sich horizontal erstreckende Arbeitsebene angeordnet, die im Wesentlichen von dem Kammerboden 4b beziehungsweise dessen Oberfläche gebildet und rechteckförmig durch die Seitenwände 4c begrenzt wird.

In der Prozesskammer 4, das heißt in einem von der geschlossenen Prozesskammer 4 umschlossenen Raum, ist außerdem eine Pulverauftragseinheit 8 mit einem über einen stabförmigen Schieber 8a parallel zur Arbeitsebene beweglichen Auftragsmedium in Form einer Bürste 8e angeordnet. Die Pulverauftragseinheit 8 ist an einer Innenseite des Deckels 4a befestigt (siehe auch Figur 2) und dadurch beim Öffnen der Prozesskammer 4 gemeinsam mit dem Deckel 4a zwischen der offenen Position (siehe Figuren 1 und 3) und der geschlossenen Position (siehe Figur 5) bewegbar. Die Pulverauftragseinheit 8 ist hierbei in der geschlossenen Position des Deckels 4a und insbesondere im laufenden Betrieb der PBLS-Anlage 1 so angeordnet, dass der Schieber 8a oberhalb der Arbeitsebene und parallel hierzu in einer Fahrtrichtung F hin und her verfahrbar ist (siehe Figur 2a), um mittels des am Schieber 8a befestigten Auftragsmediums auf der Bauplattform sowie einer hiervon getragenen Substratplatte der PBLS-Anlage 1 einen gleichmäßigen Pulverauftrag zu verwirklichen. Die geschlossene Position des Deckels 4a entspricht einer Arbeitsposition der Pulverauftragseinheit 8, wobei die Pulverauftragseinheit 8 von dem Deckel 4a in Richtung des Kammerbodens 4b herabhängt. Aufgrund der Befestigung der Pulverauftragseinheit 8 am Deckel 4a ist keine Befestigung am Kammerboden 4b vorgesehen, so dass dieser frei von Komponenten der Pulverauftragseinheit 8 ist. Der in Form von Pulver vorliegende Werkstoff zur Herstellung eines Bauteils wird dem Auftragsmedium hierfür von einem unten näher beschriebenen Bottom Up-Pulverfördermechanismus im Bereich der Arbeitsebene bereitgestellt. Weitere Details zur Prozesskammer 4 und der Pulverauftragseinheit 8 werden unten näher beschrieben.

Zwischen ihren beiden Enden wird die Arbeitsebene nicht ausschließlich vom Kammerboden 4b gebildet, da im Kammerboden 4b und damit auch in der Arbeitsebene drei in Fahrtrichtung F gesehen nebeneinander und voneinander beabstandet angeordnete Ausnehmungen vorgesehen sind.

An eine der beiden äußeren Ausnehmungen schließt sich unterhalb der Arbeitsebene ein als Pulverüberlauf für überschüssiges Pulver dienender und lösbar befestigter Auffangbehälter 14 an. Die entsprechende Ausnehmung wird durch eine obere Öffnung des Auffangbehälters 14 beziehungsweise eine sich zu deren Ausbildung zumindest mit ihrer Innenseite rechtwinklig von der Arbeitsebene nach unten erstreckende Seitenwand 14a des Auffangbehälters 14 oder durch ein entsprechend ausgebildetes Zwischenstück begrenzt, das die Ausnehmung mit dem Auffangbehälter 14 beziehungsweise dessen oberer Öffnung verbindet. Der Auffangbehälter 14 ist an einem der gegenüberliegenden Enden der Arbeitsebene angeordnet, zwischen denen der Schieber 8a mit dem Auftragsmedium in der geschlossenen Position des Deckels 4a verfährt. Die Grundfläche des Auffangbehälters 14 ist im Wesentlichen trapezförmig ausgebildet. Hierbei erstreckt sich die entsprechend längliche und schmale Grundfläche mit ihrer Längserstreckung quer zur Fahrtrichtung F und damit parallel zur Längserstreckung des Auftragsmediums und des Schiebers 8a.

An die innere der drei Ausnehmungen schließt sich unterhalb der Arbeitsebene ein erster Behälter 5a und an die andere der beiden äußeren Ausnehmungen ein zweiter Behälter 5b im eingangs beschriebenen Sinne an. Hierbei schließen sich beide Behälter 5a, 5b mit ihren oberen Öffnungen über die jeweilige Ausnehmung an die Arbeitsebene an und begrenzen diese dadurch. Beide Behälter 5a und 5b sind gleichartig aufgebaut und umfassen hierbei eine erste beziehungsweise zweite Seitenwand 6a beziehungsweise 6b, deren Innenseite rechtwinklig zur Arbeitsebene und hiervon weg verläuft. Innerhalb jeder Seitenwand 6a, 6b ist eine der entsprechenden oberen Öffnung gegenüberliegende erste beziehungsweise zweite Trägerplatte 7a beziehungsweise 7b nach Art eines Kolbens eingepasst und beweglich angeordnet, um den entsprechenden Boden des Behälters 5a, 5b zu bilden. Die Behälter 5a, 5b weisen jeweils eine Grundfläche auf. Entsprechend der Grundfläche ist die jeweilige Seitenwand 6a, 6b und der von der Trägerplatte 7a, 7b gebildete Boden ausgebildet. Vorliegend sind die Seitenwände 6a, 6b zylinderförmig ausgebildet, so dass die Behälter 5a, 5b eine Art Zylinder-Kolben-Einheit ausbilden.

Die Behälter 5a, 5b können eine runde, insbesondere wie in Figur 1 dargestellt eine kreisrunde oder auch ovale Grundfläche aufweisen. Alternativ sind jedoch auch Behälter 5a, 5b mit eckigen oder rechteckigen Grundflächen denkbar oder mit Grundflächen, die sowohl runde als auch gerade Seitenkanten aufweisen. Die Seitenwände 6a, 6b sowie die Trägerplatten 7a, 7b sind entsprechend der Grundfläche ausgebildet und in die Trägerplatten 7a, 7b sind zudem in die jeweiligen Seitenwände 6a, 6b eingepasst, um ihre oben beschriebene Funktion als Kolben zu erfüllen. Hierbei erstrecken sich die Trägerplatten 7a, 7b mit ihrer Oberfläche jeweils entsprechend der Grundfläche parallel zur Arbeitsebene und rechtwinklig zu den Seitenwänden 6a, 6b. Die Grundflächen der Behälter 5a, 5b müssen nicht wie im vorliegenden Ausführungsbeispiel identisch ausgebildet sein, sondern auch ungleiche und ungleich große Grundflächen sind denkbar. Üblicherweise ist jedoch die Grundfläche jedes Auffangbehälters 14 kleiner als die Grundfläche des als Bauteilbehälter betriebenen ersten Behälters 5a.

Die Trägerplatten 7a, 7b sind über schematisch dargestellte Antriebe 15, die beispielsweise als elektromechanische Hubzylinder, Kugelgewindetriebe, Riementriebe, pneumatische oder hydraulische Antriebe ausgebildet sind, innerhalb des jeweiligen Behälters 5a, 5b beziehungsweise deren Seitenwänden 6a, 5b in einer rein translatorischen beziehungsweise linearen Bewegung in bezüglich der Arbeitsebene senkrechter Richtung mit der nötigen Genauigkeit zur Generierung der gewünschten Schichtdicke heb- und senkbar.

Die erste Trägerplatte 7a dient als Bauplattform und wird während der Durchführung des PBLS-Verfahrens wie eingangs beschrieben gemeinsam mit der nicht dargestellten Substratplatte ausgehend von einer Ausgangslage abgesenkt, wobei das zu fertigende Bauteil und das Pulverbett auf der ersten Trägerplatte 7a beziehungsweise der darauf befestigten Substratplatte aufgebaut und hiervon innerhalb des Behälters 5a getragen werden. Um die Substratplatte an der Trägerplatte 7a anschrauben zu können, weist die Trägerplatte 7a entsprechende Bohrungen auf. Der zweite Behälter 5b ist Teil des Bottom Up-Pulverfördermechanismus und dient hierbei auch als Vorratsbehälter für Pulver, wobei die zweite Trägerplatte 7b während der Durchführung des PBLS-Verfahrens wie eingangs beschrieben in Richtung der Arbeitsebene angehoben wird, um Pulver zur Arbeitsebene zu fördern, das unterhalb der Arbeitsebene in dem zweiten Behälter 5b bevorratet ist. Durch umgekehrtes Absenken der zweiten Trägerplatte 7b wird das Volumen des zweiten Behälters 5b vergrößert, um eine entsprechende Menge neuen Pulvers aufnehmen und bevorraten zu können. Die Menge des aufnehmbaren Pulvers ist hierbei begrenzt durch das Volumen des zweiten Behälter 5b bei maximal abgesenkter Trägerplatte 7b entsprechend der maximalen Hubhöhe. In Figur 1 sind die beiden Trägerplatten 7a, 7b jeweils in einer angehobenen Position im Bereich der Arbeitsebene dargestellt.

Zur Beladung beziehungsweise Befüllung der PBLS-Anlage 1 mit pulverförmigem Werkstoff kann ein derartiger Bottom Up-Pulverfördermechanismus beziehungsweise dessen Behälter durch seine obere Öffnung und die zugehörige Ausnehmung in der Arbeitsebene befüllt werden. Hierfür ist die Prozesskammer 4 zu öffnen.

Dadurch, dass die Behälter 5a, 5b und der Auffangbehälter 14 über die jeweilige Ausnehmung im Kammerboden 4b mit der Prozesskammer 4 verbunden sind, ist bei der Durchführung des PBLS-Verfahrens die Schutzgasatmosphäre auch dort aufrechtzuerhalten und die jeweilige Verbindung entsprechend gasdicht ausgebildet. Auch die Behälter 5a, 5b sowie der Auffangbehälter 14 selbst sind gasdicht gegenüber ihrer Umgebung ausgebildet.

Die Figur 2 zeigt eine Ansicht einer Innenseite des Deckels 4a der Prozesskammer 4 der PBLS-Anlage 1. An der dargestellten Innenseite des Deckels 4a ist die Pulverauftragseinheit 8 an der Kammerdecke 4i befestigt. Außerdem ist eine der Seitenwände 4c zumindest teilweise mit der Kammerdecke 4i verbunden, um den Deckel 4a zu bilden und gemeinsam zwischen der offenen und der geschlossenen Position bewegbar zu sein. Dadurch ist die entsprechende Seitenwand 4c nur in der geschlossenen Position mit dem Kammerboden 4b und den übrigen angrenzenden Seitenwänden 4c verbunden und in allen anderen Positionen hiervon beabstandet. Dementsprechend ist der Kammerboden 4b insbesondere in der offenen Position im entsprechenden Bereich auf Höhe der Arbeitsebene frei zugänglich. Dies ermöglicht eine besonders einfache Reinigung der Prozesskammer 4.

Im vorliegenden Ausführungsbeispiel ist hierfür an der Kammerdecke 4i die gesamte Vorderwand 4f befestigt. Zusätzlich ist jede Stirnwand 4g zweigeteilt, von denen jeweils ein Teil ebenfalls als Teil des Deckels 4a an der Kammerdecke 4i befestigt ist. Die hierzu komplementären am Kammerboden 4b befestigten Teile der Stirnwände 4g (siehe Figur 1) flachen ausgehend von der Rückwand 4e ab. Beide Teile bilden in der geschlossenen Position eine vollständige rechteckförmige Stirnwand 4g (siehe auch Figur 5). Mit anderen Worten entspricht der Deckel 4a in etwa der im Bereich ihrer Diagonalebene halbierten Prozesskammer 4.

Grundsätzlich denkbar ist auch, dass die Stirnwände 4g anders geteilt und dementsprechend anteilig an der Kammerdecke 4i beziehungsweise am Kammerboden 4b befestigt sind. Auch können die Stirnwände 4g vollständig am Kammerboden 4b befestigt und nur eine Seitenwand 4c, beispielsweise nur die Vorderwand 4f, vollständig oder zumindest derart abschnittsweise am Deckel 4a befestigt sein, dass bei einer von der geschlossenen Position abweichenden Position des Deckels 4a ein entsprechender kantenfreier und damit barrierefreier Zugang zum Kammerboden 4b beziehungsweise der Arbeitsebene möglich ist.

Außerdem ist zumindest ein Sichtfenster 4h in einer der Seitenwände 4c angeordnet, beispielsweise wie in Figur 2 gezeigt zwei Sichtfenster 4h in der Vorderwand 4f, durch die in der geschlossenen Position in die Prozesskammer 4 hinein gesehen werden kann.

Um beim PBLS-Verfahren entstehendes Rauchgas, das insbesondere Rußpartikel des aufgeschmolzenen Pulvers enthält und die in die Prozesskammer 4 eingekoppelte Laserstrahlung schwächt, zuverlässig absaugen zu können, ist eine zweigeteilte Rauchgasabsaugung vorgesehen. Die Rauchgasabsaugung ist Teil eines Filtersystems zur Filterung eines das Rauchgas der PBLS-Anlage 1 enthaltenden und durch die PBLS-Anlage 1 geführten Volumenstroms . Innerhalb der Prozesskammer 4 wird der Volumenstrom in einen entlang der Einkoppelgläser 4d geführten ersten Volumenstrom und einen entlang der Arbeitsebene geführten zweiten Volumenstrom aufgeteilt. Beide Volumenströme sind zumindest im Bereich der Einkoppelgläser 4d beziehungsweise des Kammerbodens 4b möglichst homogen und laminar sowie zueinander parallel ausgebildet. Hierfür ist in Fahrtrichtung F gesehen an gegenüberliegenden Enden der Prozesskammer 4 am Kammerboden 4b jeweils eine Leiste 9d (siehe Figur 1) der Rauchgasabsaugung vorgesehen.

Ein für den ersten Volumenstrom am Deckel 4a befestigter erster Teil der Rauchgasabsaugung umfasst für jedes Einkoppelglas 4d einen flachen und trichterförmig ausgebildeten Kanal 9, der ausgehend von einer an dem entsprechenden Einkoppelglas 4d angeordneten ersten Öffnung 9a entlang des Deckels 4a in Richtung der Stirnwand 4g verläuft. Hierbei erstreckt sich die Öffnung 9a in etwa über die Breite des Einkoppelglases 4d. In Richtung der Stirnwand 4g verjüngt sich der Kanal 9, verläuft anschließend rohrförmig, insbesondere rechtwinklig, vom Deckel 4a weg und endet mit einer zweiten Öffnung 9b. Sämtliche am Deckel 4a befestigten Komponenten der Rauchgasabsaugung sind außerhalb des Bewegungsbereichs der Pulverauftragseinheit 8 angeordnet, wobei der trichterförmige Bereich des Kanals 9 zwischen dem Deckel 4a und den in Fahrtrichtung F beweglichen Komponenten der Pulverauftragseinheit 8 angeordnet ist. Zwischen den beiden Öffnungen 9a verläuft der erste Volumenstrom außerhalb des Kanals 9 und parallel zur Kammerdecke 4i durch die Prozesskammer 4, um Rauchgas aus dem Bereich der Einkoppelgläser 4d aus der Prozesskammer 4 abzuführen. Die Rauchgasabsaugung im Bereich der Einkoppelgläser 4d ist wichtig, um zu verhindern, dass diese durch rauchgasbedingte Ablagerungen verschmutzt werden und die Leistung des eingekoppelten Laserstrahls mindern oder dass diese durch erhöhte Absorption der Laserstrahlung am Schmutz aufgrund hiermit einhergehender starker lokaler Erhitzung zerstört werden.

Ein für den zweiten Volumenstrom vorgesehener zweiter Teil der Rauchgasabsaugung wird von zwei einander zugewandten Einmündungen gebildet, von denen jeweils eine in einer der beiden Leisten 9d ausgebildet ist. Zwischen den beiden Einmündungen wird der zweite Volumenstrom im Bereich des Kammerbodens 4b durch die Prozesskammer 4 geführt, um auch Rauchgas aus dem Bereich der Arbeitsebene aus der Prozesskammer 4 abzuführen.

Um den in die Prozesskammer 4 geführten Volumenstrom aufzuteilen beziehungsweise die beiden Volumenströme wieder zu einem gemeinsam durch das Filtersystem geführten Volumenstrom zu vereinigen, weist jede Leiste 9d eine dritte Öffnung 9c auf, die bei geschlossenem Deckel 4a mit der zweiten Öffnung 9b des rohrförmigen Teils des Kanals 9 zusammentrifft (siehe Figur 2a). Der Volumenstrom wird von derjenigen Leiste 9d in die Prozesskammer 4 eingeströmt und getrennt, die vom Bauteilbehälter weiter entfernt angeordnet ist. Von der näher am Bauteilbehälter angeordneten Leiste 9d werden die beiden Volumenströme wieder zusammengeführt und aus der Prozesskammer 4 heraus geführt, um gefiltert zu werden. Nach dem Filtern wird der gefilterte Volumenstrom über die Einmündung der anderen Leiste 9d zurück in die Prozesskammer 4 geführt und entsprechend aufgeteilt.

Die Pulverauftragseinheit 8 umfasst neben dem Schieber 8a für das Auftragsmedium auch eine lineare Antriebseinheit 8b mit einem Motor. Die Antriebseinheit 8b ist vorzugsweise vollständig an der Kammerdecke 4i befestigt und erstreckt sich schienenförmig in Fahrtrichtung F und hierbei vorzugsweise parallel zu einer von der Kammerdecke 4i gebildeten Ebene sowie vorzugsweise auch parallel zur Vorderwand 4f. Sowohl der Schieber 8a als auch das Auftragsmedium erstrecken sich in der geschlossenen Position des Deckels 4a mit ihrer Längserstreckung parallel zur Arbeitsebene und im Wesentlichen quer, insbesondere rechtwinklig, zur Fahrtrichtung F. Über einen von der Antriebseinheit 8b angetriebenen Antriebsschlitten 8g ist eine Traverse 8d, an der der Schieber 8a mit dem Auftragsmedium gelagert ist, in der Fahrtrichtung F zwischen gegenüberliegenden Enden des Deckels 4a, die von den beiden Stirnwänden 4g beziehungsweise deren mit der Kammerdecke 4i verbundenen Teile gebildet werden, translatorisch hin und her verfahrbar. Hierbei ist die Traverse 8d mit einem ihrer beiden Enden mit dem Antriebsschlitten 8g und mit dem gegenüberliegenden anderen Ende zur Aufnahme von Querkräften mit zwei Führungswagen 8c verbunden. Die zwei Führungswagen 8c sind hierfür in festem Abstand in Fahrtrichtung F hintereinander angeordnet und entlang einer als Führung dienenden und sich geradlinig im Sinne einer Linearführung erstreckenden Führungsschiene 8f verfahrbar. Die Führungsschiene 8f ist analog zur Antriebseinheit 8b an der Kammerdecke 4i befestigt und erstreckt sich von der Antriebseinheit 8b beabstandet und parallel hierzu sowie vorzugsweise parallel zu der von der Kammerdecke 4i gebildeten Ebene. Dadurch ist die Fahrtrichtung F in jeder Position des Deckels 4a beziehungsweise der Pulverauftragseinheit 8 parallel zu der von der Kammerdecke 4i gebildeten Ebene sowie parallel zur Arbeitsebene. Zumindest in der geschlossenen Position des Deckels 4a liegt die von der Kammerdecke 4i gebildete Ebene auch parallel zu der horizontalen Arbeitsebene.

Durch diesen Aufbau beziehungsweise die Befestigung der Pulverauftragseinheit 8 oberhalb der Arbeitsebene und insbesondere an der Kammerdecke 4i beziehungsweise dem Deckel 4a hängt die Pulverauftragseinheit 8 in der Arbeitsposition, das heißt in der geschlossenen Position des Deckels 4a, von der Kammerdecke 4i beziehungsweise vom Deckel 4a zu der Arbeitsebene herab.

Zwischen der linearen Antriebseinheit 8b und der Führungsschiene 8f sind die beiden Einkoppelgläser 4d angeordnet, wodurch bei geschlossenem Deckel 4a jeweils zumindest ein Laserstrahl eingekoppelt und zu dem entsprechenden Behälter 5a beziehungsweise 5b geführt werden kann. Auch ist durch die Einkoppelgläser 4d ein Einblick in die Prozesskammer 4 und auf die Arbeitsebene möglich. Es ist jedoch ebenso denkbar, dass nur ein entsprechend größer dimensioniertes Einkoppelglas 4d vorgesehen ist, um mit den Laserstrahlen mindestens die Trägerplatten 7a, 7b beziehungsweise Substratplatten der beiden Behälter 5a, 5b zu erreichen, sofern es sich bei der PBLS-Anlage 1 um ein Multiscannersystem handelt.

In der Figur 2a ist eine Ansicht der Pulverauftragseinheit 8 in ihrer zuvor beschriebenen Arbeitsposition bei vollständig geschlossener Prozesskammer 4 dargestellt. Erkennbar ist der Antriebsschlitten 8b, über den die Traverse 8d antriebsmäßig mit der Antriebseinheit 8b verbunden ist. Die Traverse 8d und der hiervon getragene Schieber 8a hängen in Richtung des Kammerbodens 4b herab und sind dementsprechend zwischen der Führungsschiene 8f beziehungsweise der Antriebseinheit 8b und dem Kammerboden 4b angeordnet. Keine Komponente der Pulverauftragseinheit 8 ist somit am Kammerboden 4b beziehungsweise der Arbeitsebene befestigt, sondern hiervon möglichst weit entfernt, damit eine Verunreinigung im Bereich der beweglichen Komponenten beziehungsweise Führungskomponenten, insbesondere der in Figur 2 verdeckten und daher nicht dargestellten Verbindung der Führungswagen 8c mit der Führungsschiene 8c und des Antriebsschlittens 8g mit der Antriebseinheit 8b, durch Pulver minimiert wird. Um eine dementsprechend hängende Pulverauftragseinheit 8 auszubilden, kann die Pulverauftragseinheit 8 auch teilweise oder vollständig an zumindest einer der Seitenwände 4c befestigt sein. Die entsprechende Seitenwand 4c kann an dem Kammerboden 4b befestigt sein oder als Teil des Deckels 4a oder schubladenartig in Bezug auf den Kammerboden 4b zwischen einer geschlossenen und einer offenen Position bewegbar sein, um die Prozesskammer 4 zu öffnen oder zu verschließen. Wegen der zuvor genannten Verunreinigungsproblematik erfolgt die Befestigung der Pulverauftragseinheit 8 vorzugsweise möglichst nah an der Kammerdecke 4i. Ebenso ist es denkbar, dass die Pulverauftragseinheit 8 teilweise oder vollständig an der Kammerdecke 4i befestigt ist, diese jedoch nicht als Teil eines Deckels 4a ausgebildet ist und auch nicht an einer schubladenartig bewegbaren Seitenwand 4c befestigt und mit dieser bewegbar ist. In diesem Fall kann die Prozesskammer 4 beispielsweise über eine Seitentür an einer der Seitenwände 4c geöffnet und verschlossen werden.

In der für den laufenden Betrieb der PBLS-Anlage 1 geschlossenen Position des Deckels 4a ist die Pulverauftragseinheit 8 in der Arbeitsposition (siehe Figur 2a), wobei sich zumindest das Auftragsmedium parallel zur Substratplatte und zur Arbeitsebene erstreckt, so dass auf der Bauplattform der PBLS-Anlage 1 in Fahrtrichtung F ein gleichmäßiger Pulverauftrag mit möglichst ebener und zur Substratplatte sowie zur Arbeitsebene paralleler Oberfläche der jeweiligen Pulverschicht verwirklicht werden kann. Um das Auftragsmedium parallel zu der Oberfläche der Substratplatte beziehungsweise der Arbeitsebene ausrichten oder auch leicht wechseln zu können, weist der Schieber 8a einen Klemmhalter auf, an dem beziehungsweise über das das entsprechende Auftragsmedium lösbar befestigt und entsprechend ausgerichtet werden kann. Hierfür ist jedes Einkoppelglas 4d lösbar befestigt und abnehmbar, so dass nach deren Abnahme von der Kammerdecke 4i die Pulverauftragseinheit in der Prozesskammer 4 auch bei geschlossener Position des Deckels 4a für ein entsprechendes Ausrichten zugänglich ist. Vorzugsweise erstrecken sich auch die Antriebseinheit 8b und die Führungsschiene 8f parallel zur Arbeitsebene. Alternativ kann der Schieber 8a mit dem Auftragsmedium auch um eine gegenüber der Arbeitsebene rechtwinklige und beispielsweise zwischen den beiden Behälter 5a, 5b angeordnete Achse drehbar gelagert sein, wobei die Antriebseinheit 8b einen entsprechenden Drehantrieb darstellt.

Die als Auftragsmedium dienende und über den Schieber 8a beziehungsweise Führungswagen 8c bewegliche Bürste 8e erstreckt sich durchgehend entlang der Längserstreckung des Schiebers 8a sowie in der Arbeitsposition zwischen dem Schieber 8a und der Arbeitsebene beziehungsweise dem Kammerboden 4b. Vorzugsweise erstreckt sich die Bürste 8e in der Arbeitsposition und während der Durchführung des PBLS-Verfahrens bis zur Arbeitsebene beziehungsweise zum Kammerboden 4b und berührt diese, um in der jeweiligen Fahrtrichtung F gesehen vor dem Schieber 8a beziehungsweise der Bürste 8e liegendes Pulver möglichst vollständig mitzunehmen und zugleich eine möglichst ebene Oberfläche der Pulverschicht auf Höhe der Arbeitsebene zu erzeugen. Durch die zusammenhängende Ausdehnung der Bürste 8e entlang der Längserstreckung des Schiebers 8a wird eine wirksame Länge definiert. Nur im Bereich der wirksamen Länge kann das Auftragsmedium Pulver mitnehmen und gleichmäßig auftragen. Die wirksame Länge kann auch von mehr als einer Bürste 8e gebildet werden, sofern diese entsprechend nah nebeneinander positioniert sind.

Die wirksame Länge des Auftragsmediums ist in der geschlossenen Position des Deckels 4a deckungsgleich oder kürzer gegenüber der entsprechenden Längserstreckung der Grundfläche des Auffangbehälters 14, damit das überschüssige Pulver möglichst restlos in den Pulverüberlauf geschoben werden kann, ohne sich auf der Arbeitsebene an den Rändern des jeweiligen Pulverüberlaufs zu sammeln. Um eine gleichmäßige Pulverschicht erzeugen zu können, überspannt der Schieber 8a mit seiner von dem Auftragsmedium gebildeten wirksamen Länge jedoch zumindest in der Arbeitsposition den ersten Behälter 5a für das Bauteil vollständig, vorzugsweise auch den zweiten Behälter 5b des Bottom Up-Pulverfördermechanismus. Dadurch dient das Auftragsmedium nicht nur zum Schieben von Pulver auf die erste Trägerplatte 7a beziehungsweise die Substratplatte, sondern auch als Mittel zum Glätten der hierdurch in der gewünschten Schichtdicke erzeugten Pulverschicht. Die gewünschte Schichtdicke der Pulverschicht entspricht bei der ersten Pulverschicht dem Abstand zwischen der Arbeitsebene und der Substratplatte und bei jeder weiteren Pulverschicht dem Abstand zwischen der Arbeitsebene und der Oberfläche der vorangegangenen Pulverschicht.

Das Auftragsmedium erstreckt sich allein oder zusammen mit dem Schieber 8a ausgehend von der Arbeitsebene außerdem über eine wirksame Höhe, die die Mitnahme einer Pulvermenge erlaubt, die für den Auftrag mindestens einer gleichmäßigen Pulverschicht ausreicht.

Anstelle einer Bürste 8e kann auch ein anderes Auftragsmedium wie beispielsweise eine Gummilippe, Silikonlippe, Klinge, oder Walze verwendet werden.

In der Figur 3 ist eine Seitenansicht der PBLS-Anlage 1 gemäß Figur 1 mit vollständig geöffneter Prozesskammer 4 und dementsprechend gegenüber dem Kammerboden 4b positioniertem, insbesondere von den hieran befestigten übrigen Seitenwänden 4c abgenommenem, Deckel 4a gezeigt. Hierbei ist der Deckel 4a in der offenen Position abgebildet, die einer Ruheposition der wie oben beschrieben am Deckel 4a befestigten Pulverauftragseinheit 8 entspricht.

In der offenen Position ist der Deckel 4a in etwa auf gleicher Höhe neben den am Tisch 3 befestigten Teilen der Prozesskammer 4 angeordnet und zudem so gedreht, dass der Deckel 4a mit seiner Innenseite schräg nach oben und von der PBLS-Anlage 1 und insbesondere vom Kammerboden 4b weg zeigt. Dadurch sind die Innenseite des Deckels 4a und die Pulverauftragseinheit 8 für eine neben dem Tisch 3 stehende Person leicht zugänglich, um beispielsweise das Pulverauftragsmedium zu tauschen oder den Deckel 4a und die Pulverauftragseinheit 8 bei einem Werkstoffwechsel einfach reinigen zu können. Im Vergleich zu der geschlossenen Position beziehungsweise der Arbeitsposition ist der Deckel 4a beziehungsweise die Pulverauftragseinheit 8 somit weiter von dem Kammerboden 4b beabstandet positioniert und vorzugsweise hierbei sowohl translatorisch vertikal und horizontal als auch rotatorisch versetzt angeordnet. Die Pulverauftragseinheit 8 ist in der Ruheposition folglich auch außerhalb der Prozesskammer 4 beziehungsweise des von der geschlossenen Prozesskammer 4 umschlossenen Raums angeordnet.

Um den Deckel 4a beziehungsweise die Pulverauftragseinheit 8 zwischen der offenen Position beziehungsweise der Ruheposition und der in Figur 5 gezeigten geschlossenen Position beziehungsweise Arbeitsposition bewegen zu können, ist der Deckel 4a und damit auch die Pulverauftragseinheit 8 entsprechend bewegbar, insbesondere gelenkig und somit schwenkbar, gelagert.

Hierfür umfasst die PBLS-Anlage 1 einen Schwenkmechanismus über den der Deckel 4a gelagert ist. Die nachfolgend nur in Bezug auf den Deckel 4a beschriebenen Bewegungen, die der Deckel 4a mittels des Schwenkmechanismus zwischen der offenen Position und der geschlossenen Position ausführt, gelten entsprechend auch für die Pulverauftragseinheit 8 und deren Bewegungen zwischen der Ruheposition und der Arbeitsposition, da diese durch ihre Befestigung am Deckel 4a sämtliche Bewegungen des Deckels 4a gemeinsam mit dem Deckel 4a ausführt. Aus Symmetriegründen wird außerdem nur eine von zwei identisch aufgebauten Hälften des Schwenkmechanismus beschrieben, zwischen dessen beiden Schwenkarmen 10 der Deckel 4a und damit auch die Pulverauftragseinheit 8 drehbar gelagert ist.

Jeder Schwenkarm 10 ist stabförmig ausgebildet und hebelartig mit einem Ende an einer Tragkonstruktion der PBLS-Anlage 1, insbesondere auf dem Tisch 3 und neben dem Kammerboden 4b, befestigt und hierbei um eine erste Drehachse drehbar beziehungsweise verschwenkbar gelagert. Alternativ kann der Schwenkarm 10 auch an einer der Seitenwände 4c gelagert sein. Die erste Drehachse wird von einem ortsfest an der PBLS-Anlage 1 befestigten ersten Drehlager D1 gebildet und erstreckt sich horizontal beziehungsweise parallel zum Kammerboden 4b und parallel oder quer zur Fahrtrichtung F und damit parallel einer der Seitenwände 4c, beispielweise zur Rückwand 4e oder einer der Stirnwände 4g. Über einen stabförmigen und drehfest mit dem Schwenkarm 10 verbundenen Griff 13 kann der Schwenkarm 10 um die erste Drehachse verschwenkt werden. Grundsätzlich kann der Schwenkmechanismus jedoch auch automatisiert betrieben und hierfür beispielsweise über einen Motor angetrieben werden. Der Schwenkarm 10 ist über ein zweites Drehlager D2 mit dem Deckel 4a, insbesondere mit dem hieran befestigten Teil der Stirnwand 4g, verbunden. Hierdurch ist der Deckel 4a um eine von dem zweiten Drehlager D2 gebildete zweite Drehachse drehbar an dem Schwenkarm 10 gelagert. Die erste und die zweite Drehachse verlaufen in jeder Position des Deckels 4a parallel zu einander, wobei die zweite Drehachse mit dem Schwenkarm 10 in Richtung der ersten Rotationsbewegung um die erste Drehachse bewegt wird.

In Folge einer Rotationsbewegung des Schwenkarms 10 um die erste Drehachse führt der Deckel 4a ausgehend von der offenen Position in Richtung der geschlossenen Position eine erste Rotationsbewegung um die erste Drehachse im Sinne einer Schwenkbewegung aus. Hierdurch wird der Deckel 4a zu dem Kammerboden 4b hin bewegt. Bei einer drehfesten Lagerung des Deckels 4a an dem Schwenkarm 10 wäre der Schwenkradius jedes Punkts des Deckels 4a und der Pulverauftragseinheit 8 während der ersten Rotationsbewegung konstant. Dies ist grundsätzlich auch möglich, im vorliegenden Ausführungsbeispiel jedoch nicht der Fall, da der Deckel 4a zugleich eine zweite Rotationsbewegung um die zweite Drehachse des zweiten Drehlagers D2 ausführt. Dadurch können die Schwenkradien einzelner Punkte während des Verschwenkens um die erste Drehachse so verändert werden, dass die Scannereinheit 2 in ihrer Betriebsposition verbleiben kann, obwohl sie bei drehfester Lagerung des Deckels 4a in der offenen oder geschlossenen Position im Schwenkradius eines Punktes liegen könnte und somit eine Kollision verursachen würde. Der Drehsinn der zweiten Rotationsbewegung ist hierbei durch die unten beschriebene Einbeziehung eines beispielsweise als Riementrieb ausgebildeten Zugmitteltriebs 11 in den Schwenkmechanismus dem Drehsinn der ersten Rotationsbewegung entgegengesetzt, wobei die beiden Rotationsbewegungen über den Zugmitteltrieb 11 miteinander gekoppelt sind. Hierbei dreht sich der Deckel 4a insbesondere derart um die zweite Drehachse des zweiten Drehlagers D2, dass er mit seiner Innenseite nicht mehr vom Kammerboden 4b weg, sondern in dessen Richtung zeigt, wenn der Deckel 4a unterhalb der Scannereinheit 2 in Richtung der geschlossenen Position hindurch geführt wird.

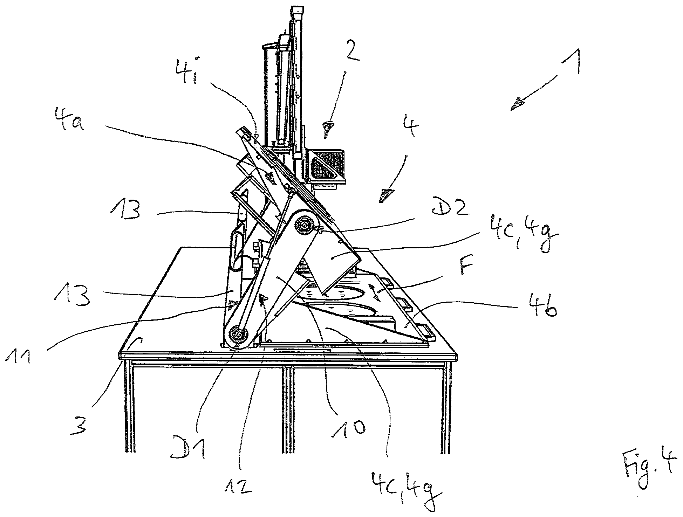

Die Figur 4 zeigt eine Seitenansicht der PBLS-Anlage 1 mit dementsprechend nur teilweise geöffneter Prozesskammer 4, wobei der Schwenkarm 10 bereits über eine Vertikale hinweg in Richtung des Kammerbodens 4b geschwenkt wurde und teilweise über diesem angeordnet ist. Der Deckel 4a wurde ausgehend von der offenen Position zugleich bereits mit entgegengesetztem Drehsinn um die zweite Drehachse gedreht, so dass die Innenseite wieder nach unten in Richtung des Tischs 3 beziehungsweise des Kammerbodens 4b zeigt. Zwischen den in Figur 3 und Figur 4 gezeigten Positionen durchläuft der Deckel 4a eine bezüglich der Kammerdecke 4i aufrechte Position, in der die Kammerdecke 4i sich vertikal zu dem Kammerboden 4b erstreckt und entsprechend in eine zu dem Kammerboden 4b parallele Richtung zeigt.

Die Figur 5 zeigt eine Seitenansicht der PBLS-Anlage 1 mit vollständig geschlossener Prozesskammer 4. Ausgehend von der Figur 4 wurden hierfür beide Rotationsbewegungen fortgeführt, wobei der Deckel 4a mit abnehmender Schräglage unter die Scannereinheit 2 geführt wird und mit horizontal ausgerichteter Kammerdecke 4i in der geschlossenen Position zur Auflage auf den am Kammerboden 4b befestigten Seitenwänden 4c kommt.

Mit entsprechend umgekehrten Bewegungen kann der Deckel 4a von der geschlossenen in die offene Position bewegt werden. Bei einer drehfesten Lagerung des Deckels 4a am Schwenkarm 10 entsprechend der geschlossenen Position würde hiervon ausgehend eine entsprechend weite Rotationsbewegung um die erste Drehachse grundsätzlich auch zu einer schräg nach oben zeigenden Innenseite des Deckels 4a entsprechend der offenen Position führen. Außer der hiermit verbundenen Problematik durchgehend konstanter Schwenkradien müsste der Schwenkarm 10 auch über einen größeren Winkelbereich als bei der um die zweite Drehachse drehbaren Lagerung des Deckels 4a verschwenkt werden, um die Innenseite des Deckels 4a wie zuvor beschrieben nach schräg oben zeigend anzuordnen.

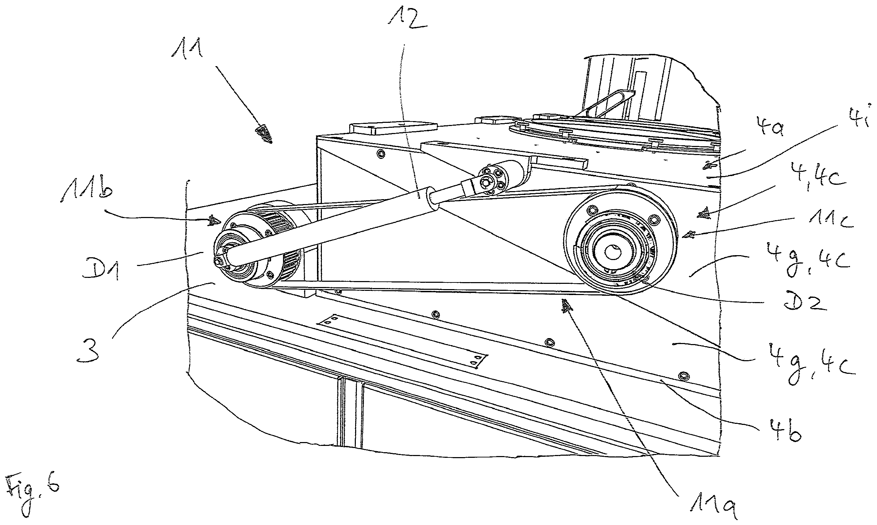

In der Figur 6 ist eine Ansicht des als Riementrieb ausgebildeten Zugmitteltriebs 11 gezeigt, über den die erste Rotationsbewegung derart mit der zweiten Rotationsbewegung gekoppelt ist, dass die erste Rotationsbewegung gleichmäßig in die gegensinnige zweite Rotationsbewegung übersetzt wird, vorzugsweise mit einem Übersetzungsverhältnis von 1:2, wodurch die zweite Rotationsbewegung den doppelten Umfang der ersten Rotationsbewegung hat. Auch andere Übersetzungsverhältnisse sind denkbar, insbesondere solche, die von einem Übersetzungsverhältnis von 1:1 abweichen. Hierfür ist am ersten Drehlager D1 eine erste Scheibe 11b in Form einer Riemenscheibe angeordnet, die koaxial mit der ersten Drehachse angeordnet, diesbezüglich aber drehfest gelagert ist. Am zweiten Drehlager D2 ist eine zweite Scheibe 11c in Form einer Riemenscheibe angeordnet, die um die zweite Drehachse drehbar gelagert ist. Die zweite Scheibe 11 c ist drehfest mit dem Deckel 4a beziehungsweise dessen Stirnwand 4g verbunden. Ein geschlossener Riemen ist als Zugmittel 11a über die beiden Scheiben 11b und 11c geführt und wird durch deren Abstand gespannt. Der Abstand der beiden Scheiben 11b und 11c voneinander ist durch den in Figur 6 nicht dargestellten Schwenkarm 10 festgelegt, der die beiden Drehlager D1 und D2 aufnimmt. Das als Riemen ausgebildete Zugmittel 11a ist vorzugsweise als Zahnriemen und die Scheiben 11b und 11c mit entsprechender äußerer Zahnung als Zahnscheiben ausgebildet.

Durch diesen Aufbau führt das Verschwenken des Schwenkarms 10 ausgehend von der geschlossenen Position dazu, dass die zweite Drehachse mit der ersten Rotationsbewegung über eine kreisbogenförmige Bahn um die erste Drehachse von dem Kammerboden 4b bewegt wird. Hierbei wird die zweite Scheibe 11c mitgeführt, wodurch diese entsprechend des Übersetzungsverhältnisses eine Zwangsdrehung um die zweite Drehachse durchführt und hierbei innen am Zugmittel 11a abläuft. Die Zwangsdrehung erfolgt wie oben beschrieben mit der zweiten Rotationsbewegung gegenläufig zu der ersten Rotationsbewegung. Beim Öffnen der Prozesskammer 4 läuft die zweite Scheibe 11c dementsprechend auf dem unteren Strang des Zugmittels 11a von der ersten Scheibe 11b weggerichtet ab und beim Schließen umgekehrt. Der an der zweiten Scheibe 11c drehfest befestigte Deckel 4a wird entsprechend mitgedreht. Hierbei bleibt der von dem Zugmittel 11a gebildete Umschlingungswinkel an der ersten Scheibe 11b konstant, während die Richtung der beiden von der ersten Scheibe 11b ablaufenden Stränge des Zugmittels 11c sich entsprechend der Schwenkbewegung des Schwenkmechanismus beziehungsweise des Schwenkarms 10 ändert. Dadurch legt sich einer der beiden Stränge in Folge der Drehung des Schwenkarms 10 an die erste Scheibe 11b an während der andere sich in gleichem Umfang löst.

Alternativ ist anstelle des Riementriebs auch in gleicher Weise der Einsatz eines anderen formschlüssigen Zugmitteltriebs 11 beziehungsweise Umschlingungsgetriebes, beispielsweise eines Kettengetriebes möglich, das analog eine erste und eine zweite Scheibe sowie ein entsprechendes Zugmittel aufweist.

Um die mittels des Griffs 13 manuell eingeleiteten Rotationsbewegungen des Schwenkmechanismus zu unterstützen oder im Sinne einer Automatisierung selbst zu bewirken, ist eine Krafteinrichtung vorgesehen, die als Federelement, das längenveränderlich und stabförmig ausgebildet ist, vorzugsweise in Form einer Gasdruckfeder 12, vorgesehen (siehe Figur 6). Das Federelement ist bezüglich der ersten Drehachse gelenkig an dem ersten Drehlager D1 befestigt (siehe Figuren 3 bis 6). Außerdem ist das Federelement gelenkig an dem Deckel 4a, insbesondere an der Stirnseite 4g, befestigt und hierbei um eine zu den ersten beiden Drehachsen parallele dritte Drehachse drehbar. Das Federelement verläuft mit seiner veränderlichen Längserstreckung im Wesentlichen parallel zu der Stirnwand 4g, so dass zwischen dem Federelement und dem Zugmitteltrieb 11 der Schwenkarm 10 angeordnet ist. Das Federelement greift neben dem zweiten Drehlager D2 an. Sofern das Federelement wie im Ausführungsbeispiel als Druckfeder ausgebildet ist, muss das Federelement an dem Deckel 4a auf einer von der Vorderwand 4f abgewandten Seite des zweiten Drehlagers D2 angelenkt sein, damit die oben beschriebene Rotationsbewegung des Deckels 4a um die zweite Drehachse beim Öffnen der Prozesskammer 4 unterstützt wird. Solange das Federelement beim Schließen der Prozesskammer 4 noch nicht vertikal und parallel zu dem Schwenkarm 10 ausgerichtet ist (siehe Figur 3) und dementsprechend seine maximale Längenausdehnung noch nicht erfahren hat, wird die entsprechende zweite Rotationsbewegung des Deckels 4a um die zweite Drehachse erleichtert und die weiter geführte Rotationsbewegung nach Überschreiten der vertikalen Ausrichtung aufgrund der bezüglich der zweiten Drehachse geänderten Drehmomentenrichtung bis zur geschlossenen Position gebremst. Umgekehrt wird die zweite Rotationsbewegung bei der Bewegung von der geschlossenen in die offene Position in gleicher Weise unterstützt. Mit gleicher Wirkung kann das Federelement auch als Zugfeder ausgebildet und dementsprechend zwischen dem zweiten Drehlager D2 und der Vorderwand 4f angelenkt sein. Anstelle eines Federelements können auch ein hydraulischer oder pneumatischer Hubzylinder oder elektrische Antriebe, die entsprechend linear wirken, als Krafteinrichtung verwendet werden.

Grundsätzlich ist es auch denkbar, dass die Pulverauftragseinheit 8 von dem Deckel 4a entkoppelt ist und von einer Bewegung des Deckels 4a zwischen der offenen und der geschlossenen Position unabhängig zwischen der Arbeitsposition und der Ruheposition bewegbar ist. Hierfür könnte ein wie oben beschrieben ausgebildeter Schwenkmechanismus auch innerhalb der Prozesskammer 4 angeordnet und gelagert sein, um die Pulverauftragseinheit 8 beispielsweise bei geöffneter Prozesskammer 4 aus der Prozesskammer 4 heraus zu schwenken. Auch kann die Pulverauftragseinheit 8 bei geschlossener und ausreichend großer Prozesskammer 4 zwischen der Arbeitsposition und einer Ruheposition innerhalb der Prozesskammer 4 bewegt werden und bei entsprechend großer Übersetzung eines zu dem Zugmitteltrieb 11 analog ausgebildeten Zugmitteltriebs wie oben beschrieben gedreht werden.

Darüber hinaus kann die Pulverauftragseinheit 8 ausgehend von der Arbeitsposition auch mit einer rein translatorischen Bewegung in eine entsprechende Ruheposition bewegt werden. In diesem Fall ist zumindest eine Komponente der Pulverauftragseinheit 8, die im laufenden Betrieb der PBLS-Anlage 1 und damit in der Arbeitsposition ortsfest angeordnet ist, beispielsweise die Antriebseinheit 8b und/oder die Führungsschiene 8f, in der Ruheposition in Bezug auf den Kammerboden 4b anders und insbesondere vertikal zum Kammerboden 4b weiter beabstandet positioniert als in der Arbeitsposition im laufenden Betrieb der PBLS-Anlage 1. Hierbei kann die Pulverauftragseinheit 8 beziehungsweise die entsprechende Komponente auch an der Kammerdecke 4i oder einer der Seitenwände 4c befestigt und mit dieser gemeinsam zwischen der geschlossenen und der offenen Position bewegbar sein. Die Ruheposition entspricht dann analog zum Ausführungsbeispiel der offenen Position der Kammerdecke 4i oder der jeweiligen Seitenwand 4c und die Arbeitsposition der geschlossenen Position.

In diesem Sinne kann die Pulverauftragseinheit 8 auch nur teilweise zwischen der Arbeitsposition und einer Ruheposition bewegbar sein, indem beispielsweise der mit der Traverse 8d verbundene Schieber 8a gemeinsam gegenüber der Antriebseinheit 8b und/oder der Führungsschiene 8f um eine Drehachse verschwenkbar beziehungsweise abklappbar ist und somit anders, insbesondere vertikal zum Kammerboden 4b weiter, bezüglich des Kammerbodens 4b beabstandet ist. Dabei kann die Pulverauftragseinheit 8 zusätzlich an einer Seitenwand 4c oder der Kammerdecke 4i befestigt und gemeinsam hiermit bewegbar sein.

Außerdem kann die Pulverauftragseinheit 8 in ihrer Ruheposition zumindest teilweise außerhalb, insbesondere neben und/oder oberhalb, der Prozesskammer 4 angeordnet sein. Dies gilt insbesondere wenn die entsprechende Seitenwand 4c oder die Kammerdecke 4i in der offenen Position hinreichend weit genug in Bezug auf den Kammerboden 4b versetzt positioniert ist, aber auch wenn die Pulverauftragseinheit 8 unabhängig von den Seitenwänden 4c und der Kammerdecke 4i aus einer entsprechend geöffneten Prozesskammer 4 heraus bewegbar ist.

### Bezugszeichenliste

- 1: PBLS-Anlage
- 2: Scannereinheit
- 3: Tisch
- 4: Prozesskammer
- 4a: Deckel
- 4b: Kammerboden
- 4c: Seitenwand
- 4d: Einkoppelglas
- 4e: Rückwand
- 4f: Vorderwand
- 4g: Stirnwand
- 4h: Sichtfenster
- 4i: Kammerdecke
- 5a: erster Behälter
- 5b: zweiter Behälter
- 6a: erste Seitenwand
- 6b: zweite Seitenwand
- 7a: erste Trägerplatte
- 7b: zweite Trägerplatte
- 8: Pulverauftragseinheit
- 8a: Schieber
- 8b: Antriebseinheit
- 8c: Führungswagen
- 8d: Traverse
- 8e: Bürste
- 8f: Führungsschiene
- 8g: Antriebsschlitten
- 9: Kanal
- 9a: erste Öffnung
- 9b: zweite Öffnung
- 9c: dritte Öffnung
- 9d: Leiste
- 10: Schwenkarm
- 11: Zugmitteltrieb
- 11a: Zugmittel
- 11b: erste Scheibe
- 11c: zweite Scheibe
- 12: Gasdruckfeder
- 13: Griff
- 14: Auffangbehälter
- 14a: Seitenwand
- 15: Antrieb
- D1: erstes Drehlager
- D2: zweites Drehlager
- F: Fahrtrichtung

## Patentansprüche

1. Pulverbettbasiertes Laserstrahlschmelzen Anlage, PBLS-Anlage, (1) mit einer Prozesskammer (4), die einen Kammerboden (4b) aufweist, der eine Arbeitsebene der PBLS-Anlage (1) bildet, und mit einer Pulverauftragseinheit (8) mit einem parallel zur Arbeitsebene beweglichen Auftragsmedium, wobei die Pulverauftragseinheit (8) an einer Tragkonstruktion der PBLS-Anlage (1) derart bewegbar befestigt ist, dass die Pulverauftragseinheit (8) zumindest teilweise zwischen einer Arbeitsposition, in der die Pulverauftragseinheit (8) im laufenden Betrieb der PBLS-Anlage (1) in der Prozesskammer (4) und oberhalb des Kammerbodens (4b) angeordnet ist und wobei mindestens eine Komponente der Pulverauftragseinheit (8) ortsfest angeordnet ist, und einer Ruheposition bewegbar ist, wobei die mindestens eine Komponente der Pulverauftragseinheit (8), die im laufenden Betrieb der PBLS-Anlage (1) in der Arbeitsposition ortsfest angeordnet ist, eine schienenförmige lineare Antriebseinheit (8b) und/oder eine als Führungsschiene (8f) ausgebildete Führung der Pulverauftragseinheit (8) ist und in der Ruheposition und/oder zwischen der Ruheposition und der Arbeitsposition in Bezug auf den Kammerboden (4b) weiter beabstandet positioniert ist als in der Arbeitsposition im laufenden Betrieb der PBLS-Anlage (1).

2. PBLS-Anlage (1) nach Anspruch 1, **dadurch gekennzeichnet, dass** die Pulverauftragseinheit (8) in der Ruheposition zumindest teilweise außerhalb der Prozesskammer (4) angeordnet ist.

3. PBLS-Anlage nach Anspruch 1 oder 2, **dadurch gekennzeichnet, dass** die Pulverauftragseinheit (8) derart drehbar befestigt ist, dass die mindestens eine Komponente der Pulverauftragseinheit (8) zwischen der Arbeitsposition und der Ruheposition eine erste Rotationsbewegung in Bezug auf eine erste Drehachse ausführt.

4. PBLS-Anlage (1) nach Anspruch 3, **dadurch gekennzeichnet, dass** die Pulverauftragseinheit (8) derart drehbar befestigt ist, dass die Pulverauftragseinheit (8) zwischen der Arbeitsposition und der Ruheposition zusätzlich eine zweite Rotationsbewegung in Bezug auf eine zweite Drehachse ausführt, die vorzugsweise parallel zu der ersten Drehachse verläuft und vorzugsweise die erste Rotationsbewegung und die zweite Rotationsbewegung einander entgegengesetzt sind.

5. PBLS-Anlage (1) nach einem der Ansprüche 1 bis 4, **dadurch gekennzeichnet, dass** die PBLS-Anlage (1) zur Befestigung der Pulverauftragseinheit (8) einen Schwenkmechanismus mit einem Schwenkarm (10) aufweist, an dem die Pulverauftragseinheit (8) befestigt ist.

6. PBLS-Anlage (1) nach Anspruch 5, **dadurch gekennzeichnet, dass** der Schwenkarm (10) über ein erstes Drehlager (D1) um die erste Drehachse drehbar gelagert ist.

7. PBLS-Anlage (1) nach Anspruch 6, **dadurch gekennzeichnet, dass** die Pulverauftragseinheit (8) über ein zweites Drehlager (D2) um die zweite Drehachse drehbar an dem Schwenkarm (10) gelagert ist.

8. PBLS-Anlage (1) nach einem der Ansprüche 5 bis 7, **dadurch gekennzeichnet, dass** der Schwenkmechanismus einen Zugmitteltrieb (11), vorzugsweise einen formschlüssigen Zugmitteltrieb (11), insbesondere in Form eines Riementriebs oder Kettengetriebes, umfasst, der derart mit der Pulverauftragseinheit (8) verbunden ist, dass die erste Rotationsbewegung mit der zweiten Rotationsbewegung gekoppelt ist, vorzugsweise derart, dass die erste Rotationsbewegung und die zweite Rotationsbewegung einander entgegengesetzt sind.

9. PBLS-Anlage (1) nach Anspruch 8, **dadurch gekennzeichnet, dass** der Zugmitteltrieb (11) ein Zugmittel (11a) umfasst, der eine erste Scheibe (11b) und eine zweite Scheibe (11c) umspannt, wobei die erste Scheibe (11b) drehfest in Bezug auf die erste Drehachse und die zweite Scheibe (11c) drehbar um die zweite Drehachse gelagert und drehfest mit der Pulverauftragseinheit (8) verbunden ist.

10. PBLS-Anlage (1) nach einem der Ansprüche 5 bis 9, **dadurch gekennzeichnet, dass** der Schwenkmechanismus eine Krafteinrichtung umfasst, die insbesondere als Federelement, vorzugsweise in Form einer Gasdruckfeder (12), als hydraulischer oder pneumatischer Antrieb, insbesondere in Form eines Hubzylinders, oder als linear wirkender elektrischer Antrieb ausgebildet ist, und die derart angeordnet ist, dass sie in der Arbeitsposition und in der Ruheposition neben dem zweiten Drehlager (D2) an der Pulverauftragseinheit (8) angreift, um die Rotationsbewegungen des Schwenkmechanismus zumindest zu unterstützen.

11. PBLS-Anlage (1) nach einem der Ansprüche 5 bis 10, **dadurch gekennzeichnet, dass** die Pulverauftragseinheit (8), insbesondere eine Antriebseinheit (8b) und/oder eine vorzugsweise als Führungsschiene (8f) ausgebildete Führung der Pulverauftragseinheit (8), an einer Seitenwand (4c) und/oder an einer Kammerdecke (4i) der Prozesskammer (4) befestigt ist, wobei die Seitenwand (4c) und/oder die Kammerdecke (4i) gemeinsam mit der Pulverauftragseinheit (8) zwischen einer geschlossenen Position, die der Arbeitsposition entspricht, und einer offenen Position, die der Ruheposition entspricht, bewegbar ist.

12. PBLS-Anlage (1) nach Anspruch 11, **dadurch gekennzeichnet, dass** die Seitenwand (4c) und/oder die Kammerdecke (4i) Teil eines bewegbaren Deckels (4a) der Prozesskammer (4) ist, der zwischen der Pulverauftragseinheit (8) und dem Schwenkmechanismus angeordnet ist.

## Claims

1. Powder bed-based laser melting system, PBLM system, (1) comprising a process chamber (4) which has a chamber floor (4b) which forms a working plane of the PBLM system (1), and comprising a powder application unit (8) having an application medium movable in parallel with the working plane, wherein the powder application unit (8) is movably attached to a support structure of the PBLM system (1) such that the powder application unit (8) can be moved at least partially between a working position, in which during ongoing operation of the PBLM system (1) the powder application unit (8) is arranged in the process chamber (4) and above the chamber floor (4b) and wherein at least one component of the powder application unit (8) is arranged in a positionally fixed manner, and a non-operative position, wherein the at least one component of the powder application unit (8) which during ongoing operation of the PBLM system (1) is arranged in a positionally fixed manner in the working position, is a rail-shaped linear drive unit (8b) and/or a guide of the powder application unit (8) designed as a guide rail (8f), and is positioned further spaced apart in the non-operative position and/or between the non-operative position and the working position in relation to the chamber floor (4b) than in the working position during ongoing operation of the PBLM system (1).

2. PBLM system (1) as claimed in claim 1, **characterised in that** the powder application unit (8) in the non-operative position is arranged at least partially outside the process chamber (4).

3. PBLM system as claimed in claim 1 or 2, **characterised in that** that the powder application unit (8) is rotatably attached such that the at least one component of the powder application unit (8) performs a first rotational movement in relation to a first axis of rotation between the working position and the non-operative position.

4. PBLM system (1) as claimed in claim 3, **characterised in that** the powder application unit (8) is rotatably attached such that the powder application unit (8) additionally performs a second rotational movement in relation to a second axis of rotation between the working position and the non-operative position, said second axis of rotation extending preferably in parallel with the first axis of rotation and preferably the first rotational movement and the second rotational movement being mutually opposed.

5. PBLM system (1) as claimed in any one of claims 1 to 4, **characterised in that**, in order to attach the powder application unit (8), the PBLM system (1) has a pivot mechanism having a pivot arm (10), to which the powder application unit (8) is attached.

6. PBLM system (1) as claimed in claim 5, **characterised in that** the pivot arm (10) is mounted so as to be able to rotate about the first axis of rotation by means of a first rotary bearing (D1).

7. PBLM system (1) as claimed in claim 6, **characterised in that** the powder application unit (8) is mounted on the pivot arm (10) so as to be able to rotate about the second axis of rotation by means of a second rotary bearing (D2).

8. PBLM system (1) as claimed in any one of claims 5 to 7, **characterised in that** the pivot mechanism comprises a traction drive (11), preferably a form-locking traction drive (11), in particular in the form of a belt drive or chain drive, which is connected to the powder application unit (8) such that the first rotational movement is coupled to the second rotational movement preferably such that the first rotational movement and the second rotational movement are mutually opposed.

9. PBLM system (1) as claimed in claim 8, **characterised in that** the traction drive (11) comprises a traction means (11a) which spans a first disk (11b) and a second disk (11c), wherein the first disk (11b) is mounted in a rotationally fixed manner in relation to the first axis of rotation and the second disk (11c) is mounted so as to be rotatable about the second axis of rotation and is connected to the powder application unit (8) for conjoint rotation therewith.

10. PBLM system (1) as claimed in any one of claims 5 to 9, **characterised in that** the pivot mechanism comprises a force device which is designed in particular as a spring element, preferably in the form of a gas compression spring (12), as a hydraulic or pneumatic drive, in particular in the form of a lifting cylinder, or is designed as a linearly acting electric drive, and is arranged such that, in the working position and in the non-operative position, it acts adjacent the second rotary bearing (D2) upon the powder application unit (8) in order to at least assist the rotational movements of the pivot mechanism.

11. PBLM system (1) as claimed in any one of claims 5 to 10, **characterised in that** the powder application unit (8), in particular a drive unit (8b) and/or a guide of the powder application unit (8) designed preferably as a guide rail (8f), is attached to a side wall (4c) and/or to a chamber ceiling (4i) of the process chamber (4), wherein the side wall (4c) and/or the chamber ceiling (4i) can be moved together with the powder application unit (8) between a closed position corresponding to the working position and an open position corresponding to the non-operative position.

12. PBLM system (1) as claimed in claim 11, **characterised in that** the side wall (4c) and/or the chamber ceiling (4i) is part of a movable cover (4a) of the process chamber (4) which is arranged between the powder application unit (8) and the pivot mechanism.

## Revendications

1. Installation de fusion par faisceau laser à base de lit de poudre, dite installation PBLS, (1) qui comprend une chambre de traitement (4), qui comporte un fond (4b) qui forme un plan de travail de l'installation PBLS (1), et une unité d'application de poudre (8) comportant un support d'application mobile parallèlement au plan de travail, l'unité d'application de poudre (8) étant fixée de manière mobile à une structure de support de l'installation PBLS (1) de telle sorte que l'unité d'application de poudre (8) est disposée au moins en partie entre une position de travail, dans laquelle l'unité d'application de poudre (8) est mobile dans la chambre de traitement (4) et au-dessus du fond (4b) lorsque l'installation PBLS (1) est en cours de fonctionnement, au moins un composant de l'unité d'application de poudre (8) est disposé de manière fixe, et une position de repos est mobile, l'au moins un composants de l'unité d'application de poudre (8), qui est disposé de manière fixe dans la position de travail lorsque l'installation PBLS (1) est en cours de fonctionnement, étant une unité d'entraînement linéaire (8b) en forme de rail et/ou un guide, conçu comme un rail de guidage (8f), de l'unité d'application de poudre (8) et étant positionné à une plus grande distance du fond (4b) dans la position de repos et/ou entre la position de repos et la position de travail que dans la position de travail lorsque l'installation PBLS (1) est en cours de fonctionnement.

2. Installation PBLS (1) selon la revendication 1, **caractérisée en ce que** l'unité d'application de poudre (8) est disposée dans la position de repos au moins en partie à l'extérieur de la chambre de traitement (4).

3. Installation PBLS selon la revendication 1 ou 2, **caractérisée en ce que** l'unité d'application de poudre (8) est fixée de manière à pouvoir tourner de telle sorte que l'au moins un composant de l'unité d'application de poudre (8) effectue entre la position de travail et la position de repos un premier mouvement de rotation par rapport à un premier axe de rotation.

4. Installation PBLS (1) selon la revendication 3, **caractérisée en ce que** l'unité d'application de poudre (8) est fixée de manière à pouvoir tourner de telle sorte que l'unité d'application de poudre (8) effectue en outre entre la position de travail et la position de repos un deuxième mouvement de rotation par rapport à un deuxième axe de rotation qui s'étend de préférence parallèlement au premier axe de rotation et de préférence de telle sorte que le premier mouvement de rotation et le deuxième mouvement de rotation soient opposés l'un à l'autre.

5. Installation PBLS (1) selon l'une des revendications 1 à 4, **caractérisée en ce que**, pour fixer l'unité d'application de poudre (8), l'installation PBLS (1) comporte un mécanisme de pivotement muni d'un bras de pivotement (10) auquel l'unité d'application de poudre (8) est fixée.

6. Installation PBLS (1) selon la revendication 5, **caractérisée en ce que** le bras de pivotement (10) est monté de manière à pouvoir tourner sur le premier axe de rotation par le biais d'un premier palier de pivotement (D1).

7. Installation PBLS (1) selon la revendication 6, **caractérisée en ce que** l'unité d'application de poudre (8) est montée sur le bras de pivotement (10) de manière à pouvoir pivoter sur le deuxième axe de rotation par le biais d'un deuxième palier de pivotement (D2).

8. Installation PBLS (1) selon l'une des revendications 5 à 7, **caractérisée en ce que** le mécanisme de pivotement comprend un entraînement par moyen de traction (11), de préférence un entraînement de moyen de traction (11) à complémentarité de formes, se présentant notamment sous la forme d'un entraînement par courroie ou d'une transmission à chaîne, qui est relié à l'unité d'application de poudre (8) de telle sorte que le premier mouvement de rotation est couplé au deuxième mouvement de rotation, de préférence de telle sorte que le premier mouvement de rotation et le deuxième mouvement de rotation soient opposés l'un à l'autre.

9. Installation PBLS (1) selon la revendication 8, **caractérisée en ce que** l'entraînement par moyen de traction (11) comprend un moyen de traction (11a) qui court autour d'une première poulie (11b) et d'une deuxième poulie (11c), la première poulie (11b) étant montée sans pouvoir tourner par rapport au premier axe de rotation et la deuxième poulie (11c) étant montée de manière à pouvoir tourner sur le deuxième axe de rotation et étant reliée solidairement en rotation à l'unité d'application de poudre (8).

10. Installation PBLS (1) selon l'une des revendications 5 à 9, **caractérisée en ce que** le mécanisme de pivotement comprend un moyen de force, conçu notamment comme un élément à ressort, de préférence sous la forme d'un ressort à pression de gaz (12), comme un entraînement hydraulique ou pneumatique, en particulier sous la forme d'un vérin de levage, ou comme un entraînement électrique à action linéaire et étant disposé de manière à s'engager dans la position de travail et dans la position de repos, à côté du deuxième palier de pivotement (D2), avec l'unité d'application de poudre (8) pour au moins favoriser les mouvements de rotation du mécanisme de pivotement.

11. Installation PBLS (1) selon l'une des revendications 5 à 10, **caractérisée en ce que** l'unité d'application de poudre (8), en particulier une unité d'entraînement (8b) et/ou un guide, conçu de préférence comme un rail de guidage (8f), de l'unité d'application de poudre (8), est fixée à une paroi latérale (4c) et/ou à un plafond (4i) de la chambre de traitement (4), la paroi latérale (4c) et/ou le plafond (4i) étant mobile conjointement avec l'unité d'application de poudre (8) entre une position fermée correspondant à la position de travail et une position ouverte correspondant à la position de repos.

12. Installation PBLS (1) selon la revendication 11, **caractérisée en ce que** la paroi latérale (4c) et/ou le plafond (4i) font partie d'un couvercle mobile (4a) de la chambre de traitement (4) qui est disposé entre l'unité d'application de poudre (8) et le mécanisme de pivotement.
